(19) Europäisches Patentamt
European Patent Office
Office européen des brevets

(11) **EP 1 276 251 B1**

(12) **EUROPEAN PATENT SPECIFICATION**

(45) Date of publication and mention
of the grant of the patent:
**11.05.2011 Bulletin 2011/19**

(51) Int Cl.:
***H04B 7/08*** *(2006.01)*

(21) Application number: **01116931.5**

(22) Date of filing: **11.07.2001**

(54) **Method for calculating a weighting vector for an antenna array**

Verfahren zur Berechnung eines Gewichtsvektors für eine Gruppenantenne

Méthode pour le calcul du vecteur de pondération d'une antenne-réseau

(84) Designated Contracting States:
**DE FR GB**

(43) Date of publication of application:
**15.01.2003 Bulletin 2003/03**

(60) Divisional application:
**05025668.4 / 1 667 341**

(73) Proprietor: **Sony Deutschland GmbH**
**10785 Berlin (DE)**

(72) Inventors:
• **Izumi, Seiichi**
**70327 Stuttgart (DE)**

• **Böhnke, Ralf**
**70327 Stuttgart (DE)**

(74) Representative: **Keck, Stephan et al**
**Witte, Weller & Partner**
**Patentanwälte**
**Königstraße 5**
**70173 Stuttgart (DE)**

(56) References cited:
**US-A- 5 982 327      US-A- 5 999 800**

**Description**

FIELD AND BACKGROUND OF THE INVENTION

The present invention generally relates to the field of wireless communication systems with high-speed mobile access, especially to pilot-assisted wireless communication systems considering channel estimation, and, more particularly, to spatial filtering (beamforming) algorithms comprising a novel weighting vector calculation method to support interference cancellation in high-speed wireless multi-carrier systems, wherein Orthogonal Frequency Division Multiplexing (OFDM) is applied as a multi-carrier modulation technique.

Nowadays, the growing demand for mobile communications is constantly increasing the need for an enhancement of its capacity and quality of service (QoS). Third and fourth generation cellular systems must be designed to handle the demand for higher data rates and quality in wireless communication systems in a cost-effective and flexible manner. To achieve these objects, a mobile transmission system must be able to cope with a plurality of impairments.

On the one hand a broadband radio channel, as needed for the transmission of high data rates, is characterized by severe attenuation fades (frequency-selective fading) caused by multipath propagation of the transmitted mobile radio signals. The wireless environment is typically characterized by a plurality of scattering processes and the absence of direct line of sight (LOS) paths between the base stations (BS) and the mobile stations (MS).On the other hand the channel exhibits a time-variant behavior due to the mobility of the receiver, which possibly requires a continuous adaptation of the transmission system to said behavior. For example, in TDMA systems the mobile radio channel causes perturbation effects on the transmission link in the form of attenuation, distortions and fluctuations.

Adaptive antennas promise to greatly increase the capacity of cellular systems by suppressing co-channel interference, improving coverage quality, and mitigating multipath interference. In the past decade, much research has been done towards merging adaptive antenna technology with existing cellular and PCS air-interface specifications based on AMPS, TDMA and CDMA technology as well as OFDM. Some of the inherent advantages of OFDM are its flexibility, scalability and the ability to communicate a wideband signal without using temporal equalization schemes.

Space diversity and antenna arrays

Space diversity is a way to considerably improve the performance of a mobile transmission system. For this purpose, antenna arrays can be used to combat various types of channel impairments. An antenna array consists of a set of antennas designed to receive signals radiating from specific directions and to attenuate signals radiating from other directions of no interest. The output of said array elements is weighted and added by means of a so-called beamformer to produce a directed main beam and adjustable nulls. In order to reject the interferences, the beamformer has to place its nulls in the direction of possible interferers, and to steer to the direction of the target signal by maintaining constant gain at this direction.

An antenna array with sufficient antenna spacing can provide spatial diversity to mitigate multipath fading. For this reason the distance between the antennas must be large enough to ensure that signals received by different antennas are uncorrelated: a spacing of at least half a wavelength is required. A distinction must be made between the following two types: micro-diversity, where the distance between different antennas is in the order of only a few wavelenghts, and macro-diversity, where said distance is at least 10 wavelenghts. In practice, this usually means that in case of micro-diversity all antennas are located at the same station, and in case of macro-diversity all antennas are located at physically separated stations. A combination of both types is often used to combat both effects caused by multipath fading (micro-diversity) and by shadowing (macro-diversity).

If the antenna elements are adequately spaced, the receiver signals can be considered as being independent, and thereby the probability that all received signals fade at the same time can drastically be reduced. Beamforming and diversity reception can be employed to cope with the effect of delay spread and co-channel interference (CCI). Consequently, the performance of the entire mobile transmission system is improved. The advances in technology and the expanding demands for antenna arrays have made them very economical, and the trend of using GHz carriers for wireless access networks has significantly reduced the dimensional requirements of said antenna arrays.

The objective is to apply a set of complex weights to the antennas that produces signal reinforcement at the mobile receiver. Early descriptions of adaptive transmitter diversity dealt only with single-user systems. More recently, uplink measurements have been used to select antenna weights that support a plurality of simultaneous users by nulling or mimimizing the interference experienced at each mobile station (MS) from transmissions intended for other mobile stations. Today it is common practice to use diversity arrays at a base station (BS) receiver to mitigate multipath fading and to support multiple users. Recent approaches to transmitter diversity distinguish the different antennas by relative delays, different spreading codes or by space-time codes, none of which requires or uses information on the current channel state. However, if such information is available from uplink measurements that are nearby in time and frequency, then adaptive transmitter diversity methods with potentially better performance can be developed.

The performance of transmission systems employing antenna arrays can be measured by means of the signal-to-noise ratio (SNR) and mutual information. Although the two metrics are closely related, they have important differences: The SNR characterizes the performance of typical uncoded systems, whereas mutual information measures determine the maximum rate of reliable communication achievable with coded systems (in the absence of delay and processing constraints).

When the message is intended for a single recipient, a beamforming strategy is optimal. With beamforming, the transmissions from the different antenna elements at the base are designed to be coherently added at the intended receiver, yielding an average enhancement of the SNR and a corresponding enhancement of the mutual information over single-element antenna systems. However, this improvement requires that the transmitter antenna array has accurate knowledge of the channel parameters to the intended recipient, which is difficult to achieve when the parameters are time-varying. Gains obtained in practice with only partial information at the transmitter are more modest as a result. In addition, in broadcast scenarios this factor of enhancement cannot be obtained at each receiver even when the parameters of all channels are perfectly known as it is generally not possible to simultaneously beamform to multiple recipients.

Antenna arrays may be employed either at the transmitter or the receiver. In a mobile radio system, it is generally most practical to employ an antenna array at the base station rather than at the mobile units. Then, for transmitting from the mobile station (MS) to the base station (BS) during the uplink, diversity is achieved by means of multiple-element receive antenna arrays ("receiver diversity"), whereas in transmitting from the base station (BS) to the mobile stations (MS) during the downlink, diversity is achieved by means of a multiple-element transmit antenna array ("transmitter diversity"). Transmitter diversity has traditionally been viewed as more difficult to exploit than receiver diversity, in part because the transmitter is assumed to know less about the channel than the receiver, and in part because of the challenging signal design problem: the transmitter is permitted to generate different signals at each antenna element.

For a receiver-adaptive antenna array, training or pilot signals, along with the internal structure of the message-carrying signals, enable the receiver to increase its signal-to-noise ratio (SNR) and carrier-to-interference ratio (CIR). For a transmitter-adaptive antenna array, usually either a-priori or auxiliary information concerning the propagation of signals from the antenna array to the desired (in-cell) and undesired (out-of-cell) receivers is needed.

Space-time processing promises to significantly improve mobile radio performance. The principles of space-time processing can be used to develop "smart" antennas that employ adaptive arrays of antenna sensors. Therefore, the "smart antenna" concept has become very interesting for the mobile communications industry. The term "smart antenna" usually refers to the deployment of multiple antennas at the base station (BS), coupled with special processing of the multiple received signals. Smart antennas can adaptively reject co-channel interference (CCI) and mitigate effects caused by multipath fading. They have been identified as a promising means to extend the base-station coverage, increase the system capacity and enhance the quality of servive (QoS).

A "smart" antenna generally consists of the sensor array, the beamforming network and the adaptive processor.

- Sensor array: To receive (and transmit) signals, the sensor array comprises N antenna elements (sensors). The physical arrangement of the array (linear, circular, etc.) is arbitrary, but places fundamental limitations on the capability of the "smart" antenna.

- Beamforming network: The output of each of these N antenna elements is fed into the beamforming network, where the outputs are processed by means of linear time-variant (LTV) filters. These filters determine the directional pattern of the "smart" antenna, that means the relative sensibility of response to signals for a specified frequency from various directions. The outputs of the LTV filters are then summed to form the overall output y(t). The complex weights of the LTV filters are determined by the adaptive processor.

- Adaptive processor: As mentioned above, the adaptive processor determines the complex weights of the beamforming network. The signals and known system features used to compute said weights include the following items: the signals $x_i(n)$ (for i = 0,...,N-1) received by the antenna array, the output y(n) of the "smart" antenna, the spatial structure of the antenna array, the temporal structure of the received signal, feedback signals from the mobile stations (MS), and the network topology.

For the general case, where the receiver employs an array of antenna elements, a vector channel model is used. Therein, the channel model contains both the temporal and spatial characteristics of the channel.

BRIEF DESCRIPTION OF THE PRESENT STATE OF THE ART

According to the present state of the art, there are different solutions available to the problem of adaptive antenna processing concerning techniques for performing an interference cancellation, each of them being optimized to a specific environment. Thus, each of these solutions inherently contains certain restrictions. In order to representatively explain some of the most important solutions, it is necessary to briefly describe their main aspects.

Power control and beamforming

As mentioned above, one of the main impairments that degrades the performance of a wireless link in a cellular radio system is co-channel interference (CCI). Two important approaches for improving the performance in wireless networks by appropriately controlling the co-channel interference are power control and spatial filtering (antenna beamforming).

In power control, the transmitter powers are constantly adjusted by increasing if the signal-to-noise ratio (SNR) is low, and decreasing if the SNR is high, such that the quality of weak communication links can be improved. Receivers employing antenna arrays may adjust their beam patterns in such a way that they obtain maximum gain towards the directions of their transmitters and minimum gain towards the other directions, such that the overall interference power can be minimized.

Linear processing using antenna arrays is a signal processing technique called spatial filtering or "beamforming". A beamformer uses an array of antenna elements to exploit the spatial separation of impinging signals that mutually overlap in their spectra. This spatial filtering process enables the beamformer to separate the desired signals from the interferering signals by adaptively updating its weights and steering beams towards the desired users.

Thus, the purpose of an adaptive beamforming in the downlink is to modify the beam pattern in order to enhance the reception of the desired signal at the mobile station (MS), while simultaneously suppressing interfering signals by means of a complex weight selection. In other words, beams are formed in such a way that they point in the direction of the desired user in order to minimize the energy transmitted in direction of interfering sources. By properly adjusting the phase of each antenna, the main lobe of the antenna pattern can be directed to the desired angle. This enhances the strength of the desired signal and also suppresses the interference from signals coming from undesired directions. Additionally, adaptive beamforming reduces multipath fading of the transmitted signals by using narrow beams.

Many weight adaptation algorithms are known from literature. They all combine signals from multiple antennas in order to satisfy specific optimization criteria. These criteria comprise methods for minimizing the mean square error (MSE), maximizing the signal-to-noise ratio (SNR), and maximizing variance. These algorithms find applications in both spatial processing and temporal processing. The three most commonly used adaptation techniques are: Least Mean Squares (LMS), Direct Matrix Inversion (DMI) and Recursive Least Squares (RLS). In the following, two commonly used beamforming algorithms shall representatively be described.

Common adaptation techniques used in spatial and temporal processing

The main goal of common adaptive algorithms used in spatial and temporal processing is to maximize the output signal-to-interference-plus-noise ratio (SINR). This is accomplished by minimizing the cost functions associated with various criteria, e.g. Minimum Mean Square Error (MMSE) and Least Squares (LS) criteria.

In the following, three algorithms for adaptively updating a finite impulse response (FIR) filter - spatial or temporal - shall briefly be described. These techniques can also easily be extended to perform channel estimation. Thereby, the signal estimate y(n) is assumed to be estimated from a finite collection of received data samples $\underline{x}$(n) with an FIR filter or weight vector $\underline{w}$. This can be expressed with the following inner product:

$$y(n) = \underline{w}^H \underline{x}(n),$$

wherein

| | |
|---|---|
| N | is the number of antenna elements, |
| $\underline{w} \in C^N$ | denotes the complex-valued weighting vector, |
| $\underline{x}(n) \in C^N$ | denotes the complex-valued received signal vector, |
| $y(n) \in C$ | denotes the complex-valued output signal, and |
| 'H' | denotes the complex conjugate transpose operation (Hermitian transpose). |

The vector $\underline{x}$(n) can be a collection of past time samples (in the case of temporal filtering), or a collection of antenna outputs (in the case of spatial filtering).

1. Minimum Mean Square Error (MMSE) algorithm

The cost function J($\underline{w}$) for the MMSE criterion is the expected value of the square error between the beamformer (or equalizer) output y(n) and the desired version d(n) of that signal:

$$J(\underline{w}) := E\{|y(n)-d(n)|^2\}.$$

The optimal solution for the weights can be found by means of the following equation:

$$\underline{w}^{opt} = \underline{\underline{A}}^{-1}\underline{p},$$

wherein

| | |
|---|---|
| $A := E\{\underline{x}(n)\underline{x}(n)^H\} \in C^{N \times N}$ | is the complex-valued space-time correlation matrix of the time- variant sensor data $\underline{x}(n) \in C^N$ from N antenna elements with the discrete time variable n, |
| $\underline{p} := E\{\underline{x}(n) \cdot d(n)^*\} \in C^N$ | is the correlation of the complex- valued sensor data $\underline{x}(n) \in C^N$ with the desired signal d(n) $\in$ C, |
| '*' | denotes the complex conjugate opera- tion, and |
| 'H' | is the complex conjugate transpose operation (Hermitian transpose). |

2. Least Mean Squares (LMS) algorithm

Another algorithm which is frequently used in antenna array processing is the time-domain Least Mean Square (LMS) adaptive algorithm. The LMS algorithm uses a minimum mean square error criterion to determine the appropriate antenna weighting vectors $\underline{w}$. This algorithm is considered as an optimal algorithm because the solution minimizes the error between the array output and the desired signal. Therefore, it is assumed that the desired signal is known, or a signal containing the desired signal characteristics is available. The LMS iterative equations are:

$$\underline{w}(n+1) = \underline{w}(n) + \mu \cdot \underline{x}(n)^* \cdot \varepsilon(n) \quad \forall n,$$

wherein

| | |
|---|---|
| $\mu$ | is the constant stepsize, which governs the rate of convergence of said iterative process, |
| $\varepsilon(n) = d(n)-y(n)$ | is the error function between the desired signal d(n) and the output y(n), and |
| '*' | denotes the complex conjugate operation. |

LMS is a computationally simple algorithm. Its complexity grows linearly with the number of antenna elements N. However, it suffers from slow convergence. Unlike the MMSE criterion, the LS criterion tries to minimize the time-average error between the linear processor output and a desired response over a finite number of time samples. The cost function J($\underline{w}$) for the LS criterion is:

$$J(\underline{w}) = \left| \sum_{i=0}^{N-1} \underline{w}^H \underline{x}_i - d_i(n) \right|^2,$$

wherein

$\underline{x}_i \in C^N$     is the i-th received data vector,
$d_i(n) \in C$     is the i-th desired signal at the discrete time n,
N     is the number of the antenna elements, and
$\underline{w}^H \underline{x}_i$     denotes the inner product of the vectors $\underline{w}$ and $\underline{x}_i$.

The optimal weight vector that forces the LS gradient function to zero is given by

$$\underline{w} = (\underline{\underline{X}}^H \underline{\underline{X}})^{-1} \underline{\underline{X}}^H \underline{d}(n) \in C^N,$$

wherein

$\underline{X} := [\underline{x}_0,..., \underline{x}_{N\text{-}1}] \in C^{N \times N}$     is the received data matrix,
$\underline{d}(n) := [d_0(n),..., d_{N\text{-}1}(n)]^T \in C^N$     denotes the desired signal vector, and
'H'     is the complex conjugate transpose operation (Hermitian transpose).

3. Maximum power beamforming algorithm

Recently, eigenvector-based methods have been developed to perform a maximum power beamforming for randomly spaced antenna array systems. These algorithms use the autocorrelation matrix $\underline{A}$ of the sensor data to find the weighting filters that pick out the signal with the highest peak power spectral density. Thereby, antenna weighting vectors $\underline{w}$ are chosen to solve the following maximization problem,

$$\underline{w}^{opt} = \arg \max_{\underline{w}} \left\{ \underline{w}^H \underline{A} \underline{w} \right\}, \text{ subject to } \|\underline{w}\|_2 = 1,$$

wherein

$A := E\{\underline{x}(n)\underline{x}(n)^H\} \in C^{N \times N}$     is the complex-valued space-time correlation matrix of the time-variant sensor data $\underline{x}(n) \in C^N$ from N antenna elements with the discrete time variable n,
$\underline{w} \in C^N$     is the desired complex-valued weighting vector,
$\underline{w}^H$     denotes the complex conjugate transpose operation (Hermitian transpose) of w,
    denotes the Euclidian length of $\underline{w}$,

$$\|\underline{w}\|_2 := \sqrt{\underline{w}^H \underline{w}}$$

is the inner product of w with w.

$$\underline{w}^H \underline{w} := \sum_{i=0}^{N-1} |w_i|^2$$

The desired weighting vector $\underline{w}$ is given by the eigenvector corresponding to the largest eigenvalue of the autocorrelation matrix $\underline{A}$. The bulk of the computation involved in maximum power beamforming is involved in the following steps:

    a) calculating the autocorrelation matrix $\underline{A}$ from the sensor data $\underline{x}(n)$, and

b)performing the eigenvector decomposition of the autocorrelation matrix $\underline{A}$.

The power method of eigenvector decomposition provides a low-computation, iterative method to find the eigenvector with the largest eigenvalue.

Single-channel signal extraction algorithms

Common single-channel signal extraction algorithms include interference rejection and joint detection (JD) techniques. In all these algorithms, only temporal processing is utilized since the receiver antenna at the base station (BS) contains only one element.

Interference rejection algorithms can be divided into non-blind and blind interference rejection techniques that only employ temporal processing. The non-blind techniques employ some sort of training to estimate channel and receiver parameters with adaptive processing. On the contrary, in blind techniques training sequences are not available and channel is estimated using some known structure of the signals. In the following, only non-blind interference rejection techniques shall be considered.

Non-blind adaptive processing techniques can be broken into three main approaches: Linear Time-Independent Adaptive Filtering (LTIAF), Linear Time-Dependent Adaptive Filtering (LTDAF), and non-linear adaptive processing using Decision Feedback Equalizers (DFE) or Maximum Likelihood Sequence Estimators (MLSE). In order to give a brief overview, some of the most frequently used techniques shall representatively be described.

Despite their low computational complexities and simple structures, Minimum Mean Square Error (MMSE) linear equalizers - LTIAF and LTDAF - are not very efficient on channels with deep spectral nulls in the passband. This is because the linear equalizer places high gain near the spectral null in order to compensate for the distortion, thereby enhancing the noise present in those frequencies. Non-linear methods do not suffer from this phenomenon. One of the most common forms of a non-linear adaptive processor is the Decision Feedback Equalizer (DFE), which is commonly used as an equalizer to mitigate the intersymbol interference (ISI) in the channel. In addition to ISI mitigation, DFE can perform limited interference rejection. In the literature adaptive, fractionally spaced DFE have been proposed to cancel co-channel interference (CCI) and suppress ISI in the presence of a single, dominant co-channel signal and uncorrelated, additive Gaussian noise.

The above-mentioned interference rejection techniques attempt to estimate interfering signals and then strip them from the total signal, leaving only the desired signal components plus noise. On the other hand joint detection (JD) algorithms recover all the signals, desired and interfering, from the signal environment, and then discard the latter. Said algorithms are based on the Maximum Likelihood (ML) and Maximum a Posteriori (MAP) criteria for the joint recovery of the co-channel signals. These criteria are used to derive two important sequence estimation and symbol-by-symbol detection techniques, Maximum Likelihood Sequence Estimation (MLSE) and Maximum A Posteriori Symbol Detection (MAPSD), respectively.

Multi-channel signal extraction algorithms

In a mobile communication system, effects caused by multipath propagation of the signals to be transmitted and co-channel interference (CCI) are the major impairments to the signal quality and system capacity. Multipath propagation gives rise to fading and time dispersion. The time dispersion problem can be solved using linear equalizers or non-linear equalization techniques such as Decision Feedback Equalization (DFE) and Maximum Likelihood Sequence Estimation (MLSE). Multipath fading can be mitigated by antenna diversity at the receiver. These multiple antennas collect more signal energy and diversity gain due to the spatial separation of their antenna elements. When the antennas are spaced appropriately, there is a good chance that not all of them will fade at the same time. Moreover, multiple antennas can be used to combine multiple copies of both desired and interfering signals in such a way that the desired signal components can constructively be added, whereas the interfering signals add destructively. This process of exploiting spatial diversity is called spatial equalization. Space-Time Adaptive Processing (STAP) receivers combine spatial and temporal equalization in order to provide better interference rejection performance as well as better intersymbol interference (ISI) reduction than single antenna receivers. Similar to single antenna array processing techniques, STAP algorithms can be classified according to how they treat interference: interference rejection or joint detection.

Non-blind interference rejection techniques require the use of training sequences to estimate the mobile radio channel. Although the use of training sequences greatly simplifies the channel estimation problem, exploiting them can be difficult when interfering users transmit asynchronously. Non-blind interference rejection techniques can be broken into linear, non-linear, and hybrid categories. Linear interference rejection tends to break down in overloaded environments. By contrast, hybrid techniques combining linear and non-linear approaches have been proposed that try to combine the advantages of each approach.

In the literature, linear signal extraction techniques can be classified as spatio-temporal techniques. Thereby, the antenna weights are optimized using the MMSE criterion. Their object is to maximize the output signal-to-interference-plus-noise ratio (SINR).

Adaptive beamforming algorithms for signal acquisition in digital radio systems are known from the prior art. Linear beamformer are used for steering nulls in the direction of the interfering signals. Additionally, a frame synchronization is achieved by locating the peaks in the cross correlation of the beamformer outputs with modified training sequences. The beamformer weights are updated using a LS criterion, and an equalization of intersymbol interference (ISI) is carried out using a fractionally spaced linear equalizer. The algorithm can effectively separate several users. However, its performance is limited by the linear beamformer, that means as long as the number of co-channel users does not exceed the number of antenna elements, a linear beamformer (N-element array) can null out up to N-1 users.

Many signal extraction and interference rejection algorithms concatenate linear array processing with non-linear temporal processing such as DFE and MLSE. In general, non-linear adaptive array processing techniques perform much better than the aforementioned linear techniques, especially in severe multi-path fading environments.

Joint detection (JD) receivers are capable of eliminating intracell interference, that means the interference caused by other users in the same time slot and cell, with a reasonable effort and complexity. The purpose of joint space-time processing is to obtain spatial autocorrelation matrices which can directly be used for the calculation of the beamforming weights needed for the downlink. The spatial autocorrelation matrix of the interference $\underline{B}$ is computed by estimating the spatial autocorrelation matrix of the complete received signal and by subtracting the estimated spatial autocorrelation matrices of the intracell users. The joint detector eliminates the greatest portion of the intracell interference. Therefore, the spatial autocorrelation matrix $\underline{B}$ only contains contributions from co-channel interference (CCI) caused by mobile stations (MS) from other cells.

Orthogonal Frequency Division Multiplex (OFDM)

If a conventional single-carrier transmission system is applied in an environment with said severe transmission conditions, the channel equalization, which is supposed to eliminate the influence of the radio channel as far as possible, can be very extensive. The choice of an appropriate modulation technique for wireless data communication is therefore a critical issue due to the adverse influence of the dispersive and mostly time-variant mobile radio channel. In recent years, the interest in multi-carrier modulation for wireless transmission has been revived, whereas in former times the practicality of this concept appeared to be limited.

An approach to multi-carrier modulation which can easily be realized is Orthogonal Frequency Division Multiplexing (OFDM). OFDM offers advantages in transmission over severe multipath channels, so that there is an increased interest in applying OFDM in high-rate mobile or portable data transmission today.

Conventional single-carrier modulation methods for the transmission at high symbol rates experience a severe limitation in time-dispersive and frequency-selective channels due to their sensitivity to intersymbol interference (ISI). To handle ISI, usually the entire bandwidth of the single-carrier signal has to be (adaptively) equalized by quite complex time-domain channel equalizers, like Viterbi equalizers. Thereby, the complexity of a channel equalizer increases with the number of the ISIs which have to be eliminated. If a high data rate R of about $10^7$ modulation symbols per second is transmitted over a radio channel having a maximum delay $\tau_{max}$ of 10 $\mu$s, ISIs can arise extending over 100 modulation symbols. A corresponding equalizer can be too expensive for an implementation. In addition, it is conceivable that the adaptation of the filter coefficients to a time-variant mobile radio channel would show an unstable behavior. Moreover, together with channel coding, reliability information on the equalized channel symbols is desired. Especially, if the channels are as difficult as in mobile communications, channel estimation is complex.

When operating in a frequency-selective environment, the best interference suppresion performance is generally achieved when wideband algorithms are employed by the adaptive antenna array. However, many wideband adaptive antenna algorithms employ a Fast Fourier Transform (FFT) processing, which is also commonly used in an OFDM demodulator to produce the narrow-band subcarriers of a received OFDM signal. Therefore, a naband subcarriers of received OFDM signal. Therefore, a natural way to merge adaptive antennas with OFDM is to employ narrowband adaptive array techniques on the demodulated subcarriers in the OFDM receiver.

In a pilot-assisted OFDM system, reference-signal-based adaptive array algorithms are appropriate for interference suppression and equalization. Algorithms of this type operate on the pilot symbols transmitted by the desired user to produce a weight vector that attempts to minimize the mean square error between the array output and the known pilot sequence. For best performance, these algorithms need the channel and signal characteristics to be relatively constant over the interval in which said weights are computed and applied to the received signal. Algorithms which can not track channel variations suffer from a significant degradation in the bit error rate (BER) and the signal-to-interference-plus-noise ratio (SINR).

In an OFDM system employing an adaptive antenna algorithm on the baseband subcarriers produced by the FFT demodulator, it is difficult to guarantee that the channel will be constant over the intervals in which the weights are computed and applied to the array data. Although each subcarrier can be assumed to be flat faded, the presence of delay spread on the channel can cause significant decorrelation in the fading processes on different subcarriers within a time-frequency slot. Even in a fixed wireless access system, temporal variations in the channel can and will occur due to the motion of any surrounding objects in the system.

Prior patent applications concerning related tasks

The invention proposed in the European patent application No. 00 118 418 relates to a communication device for receiving and transmitting OFDM signals in a wireless communication system. The system further comprises diversity antenna means including a plurality of antenna elements, means for individually adjusting the amplitude of at least one subcarrier signal of said OFDM signal to be transmitted for each of said antenna elements in accordance with measured attenuation information. Thereby, a higher amplitude is given to each sub-carrier of said OFDM transmission signal if said measurement indicates a lower attenuation of the associated transmission channel, and vice versa. In this way, an unnecessary transmission of energy on severely distorted transmission channels can be avoided.

From the European patent application No. 00 125 436 a method for adjusting the transmission characteristics of subcarriers of a multi-carrier transmission system using a plurality of antenna elements is known, for example in case of an OFDM multicarrier transmission system. Thereby, the power and the phase of the subcarriers can be adapted. For this purpose, the power of each subcarrier is distributed by means of a weighting unit. Additionally, said subcarriers can be further pre-equalized by dividing the respective subcarrier signal by the sum of the squared magnitude of the frequency channel characteristics of all subcarrier signals or a frequency characteristic of the selected antenna element.

In the European patent application No. 00 125 435 an adaptive loading calculation and signaling scheme is disclosed for being applied to wireless multi-carrier transmission systems, wherein an Adaptive Loading Calculation block calculates loading tables which contain one entry for each data subcarrier. Thereby, fading channel profile information is used to detect the power of the current fading on each subcarrier. After the subcarriers have been sorted according to their power levels, subcarriers with high power levels use an higher modulation scheme as the originally selected ones, whereas simultaneously subcarriers with low power levels use a lower modulation scheme.

In the European patent application No. 0 982 875 a method and an apparatus for increasing system capacity and mitigating negative effects caused by high-power users in a mixed-rate CDMA system are disclosed. Thereby, improvements are obtained by applying multi-user detection, antenna array processing or a combination of both techniques to explicitly cancel or attenuate only said high-power users. In this approach a combination of said multi-user detection technique and said antenna array processing technique can be performed to recover system capacity appropriated by the high-power users.

The US patent application No. 4,353,119 pertains to a receiver system, wherein complex-valued weighting vectors are applied to weight signals from N omnidirectional auxiliary antennas connected to each other. The weighted outputs are then summed with the signal from the main antenna of said receiver system to suppress undesired sidelobe effects caused by the same interferer signal. Moreover, the underlying invention presents a Batch Covariance Relaxation (BCR) approach to solve a complex system of N linear equations in N unknowns involving a Hermitian matrix.

In the US patent application No. 6,141,393 a method and a device used for a communication system including a receiver having a plurality of adaptive antennas for receiving a plurality of informations bursts transmitted by at least one transmitting user device is disclosed. Thereby, the information bursts contain a number of data symbols and a pilot symbol sequence of content known at both the transmitting user device and the receiver. Additionally, an error signal between a simulated received pilot signal and the received pilot symbol sequence is calculated, and a channel model sequence is computed, wherein the power of the error signal is minimized and the channel transfer function is computed by weighting predetermined basis functions.

The US patent application No. 5,694,416 relates to an equipment and methods for increasing the signal-to-interference-plus-noise ratio (SINR) of global positioning system (GPS) receivers. Therein, a navigation satellite receiver for receiving GPS signals being able to suppress interference and enhance satellite signals by using differences in their spatial positions is disclosed. Said receiver comprises four adaptive antennas being arranged in a spatial array. A Code Gated Maximum Likelihood (CGML) technique is applied to whiten predetermined aperture estimates by multiplying these estimates with the mathematical inverse Cholesky factor of the interference data, in order to maximize the ratio of the GPS signal power to the interference power.

US 5982327 shows inter alia a method for weighting a plurality of antenna output signals based on two covariance matrices. In col. 7, from l. 15 on, it is explained that a typical weight-selection criterion is to maximize the ratio of the desired signal power to the combined power of the interference plus noise, the so called SINR. Equation (5) is the expression of the instantaneous SINR at symbol k in terms of a desired spatial covariance matrix in the numerator and an undesired spatial covariance matrix in the denominator. This equation is a Rayleigh Quotient (cf. col. 7, l. 36). Furthermore, in col. 4, l. 55-58, it is stated that each symbol in an OFDM system corresponds to one of the subcarriers.

US 5999800 refers to an array antenna, whereby the interference and noise signals are reduced by a proper beam pattern design. A conjugate gradient method is disclosed to compute the weight vector, which corresponds to the largest eigenvalue and provides therefore the maximum gain along the direction of the wanted signal. Said method comprises the maximisation of a cost function defined with a Rayleigh Quotient (cf. equation (12)).

DEFICIENCIES AND DISADVANTAGES OF THE KNOWN SOLUTIONS OF THE PRESENT STATE OF THE ART

As mentioned above, each of the applied interference cancellation techniques is optimized to a specific purpose, and thus it contains certain limitations.

For example, the European patent application No. 0 982 875 is mainly related to CDMA systems, and the US patent application No. 5,694,416 pertains to GPS systems.

Using adaptive array antenna schemes or antenna diversity is a conventional method to accommodate large numbers of mobile terminals (MTs) in a cell. Methods of generating antenna weighting vectors according to the present state of the art, which are used to maximize the carrier-to-interference ratio (CIR), normally apply complicated matrix-vector calculations such as the Batch Covariance Relaxation (BCR) approach as described in the US patent application No. 4,353,119, or the Code Gated Maximum Likelihood (CGML) technique as described in the US patent application No. 5,694,416, in which an inverse matrix calculation of the autocorrelation matrix is required.

Particularly, in multi-carrier systems such as OFDM an antenna weighting vector calculation is performed for each sub-carrier. Hence, the total number of necessary calculations is huge and a simpler method is required.

OBJECT OF THE UNDERLYING INVENTION

In view of the explanations mentioned above it is the object of the invention to propose a simplified low-cost and low effort interference cancellation technique for a high-speed wireless multi-carrier system. The technique should allow to estimate and equalize the impairments of the received signal caused by the time-variant multipath fading channel, in order to improve the transmission quality of the system.

This object is achieved by means of the features of the independent claims. Advantageous features are defined in the dependent claims.

SUMMARY OF THE INVENTION

The underlying invention describes a low-cost and low-effort solution for an interference cancellation technique applied to a high-speed wireless multi-carrier system for supporting mobile applications within environments being severely impaired by the time-varying multipath fading behavior of the mobile radio channel. Thereby, the vector channel model is applied.

The N-dimensional signal channel vector of the k-th subcarrier (k = 0, 1, ..., K-1) of a transmitted OFDM signal, given by

$$\underline{a}_k(n) = [a_{k,0}(n), \ldots, a_{k,i}(n), \ldots, a_{k,(N-1)}(n)]^T \in C^N$$
$$\text{for } i = 0, 1, \ldots, N-1,$$

wherein n denotes the discrete time variable, contains the complex-valued channel impulse response of all N antenna elements. The N-dimensional complex-valued interference channel vector of the k-th subcarrier is given by

$$\underline{b}_k^{(j)}(n) = [b_{k,0}^{(j)}(n), \ldots, b_{k,i}^{(j)}(n), \ldots, b_{k,(N-1)}^{(j)}(n)]^T \in C^N$$
$$\text{for } i = 0, 1, \ldots, N-1 \text{ and } j = 0, 1, \ldots, M-1,$$

wherein j denotes the index of the interferer. Thereby, the signal channel vector $\underline{a}_k(n)$ can be estimated from pilot symbols during the receive mode of Time Division Duplex (TDD).

The interference channel vector $\underline{b}_k^{(j)}(n)$ should also be estimated as a required signal. In this case, the signal channel estimation for both required and interference signal should be done separately.

After combining the required signal from all N antenna elements with the N-dimensional signal channel vector of the k-th subcarrier, given by

$$\underline{w}_k(n) = [w_{k,0}(n),\ldots,w_{k,i}(n),\ldots,w_{k,(N-1)}(n)]^T \in \mathbb{C}^N$$
$$\text{for } i = 0,1,\ldots,N-1,$$

the power of the combined signal - omitting the time variance represented by the discrete time variable n - can be written as

$$E\{|\underline{a}_k^H\underline{w}_k|^2\} = E\{(\underline{a}_k^H\underline{w}_k)^H(\underline{a}_k^H\underline{w}_k)\} = \underline{w}_k^H E\{\underline{a}_k\underline{a}_k^H\}\underline{w}_k = \underline{w}_k^H\underline{\underline{A}}_k\underline{w}_k, \quad (1)$$

wherein

'H' denotes the complex conjugate transpose operation (Hermitian transpose), and

E{.} denotes the expected value of its argument.

The complex-valued N×N-dimensional desired spatial covariance matrix $\underline{A}_k$ is defined as the outer product of the signal channel vectors:

$$\underline{\underline{A}}_k := E\{\underline{a}_k\underline{a}_k^H\} \in \mathbb{C}^{N\times N}. \quad (2)$$

As can be taken from the previous European patent application No. 00 118 418, the channel estimate vector $\underline{a}_k$ can also be employed as most adequate antenna weighting vector $\underline{w}_k$ to maximize the required signal power $\underline{w}_k^H A_k \underline{w}_k$.

To maximize the carrier-to-interference ratio (CIR), the antenna weighting vector $\underline{w}_k$ is chosen in such a way that the Rayleigh quotient

$$\Gamma_k := \frac{\underline{w}_k^H\underline{\underline{A}}_k\underline{w}_k}{\underline{w}_k^H\underline{\underline{B}}_k\underline{w}_k} \in \mathbb{C}, \quad (3)$$

which corresponds to the carrier-to-interference ratio (CIR), can be maximized. Thereby, the denominator denotes the power of the interference which can be calculated as follows:

$$E\left\{\left|\left(\sum_{j=0}^{M-1}\underline{b}_k^{(j)}\right)^H \underline{w}_k\right|^2\right\} = E\left\{\left[\left(\sum_{j=0}^{M-1}\underline{b}_k^{(j)}\right)^H \underline{w}_k\right]^* \left[\left(\sum_{j=0}^{M-1}\underline{b}_k^{(j)}\right)^H \underline{w}_k\right]\right\}$$

$$= E\left\{\left[\left(\sum_{j=0}^{M-1}\underline{b}_k^{(j)}\right)^H \underline{w}_k\right]^H \left[\left(\sum_{j=0}^{M-1}\underline{b}_k^{(j)}\right)^H \underline{w}_k\right]\right\} = \underline{w}_k^H E\left\{\left(\sum_{j=0}^{M-1}\underline{b}_k^{(j)}\right)\left(\sum_{j=0}^{M-1}\underline{b}_k^{(j)}\right)^H\right\} \underline{w}_k$$

$$= \underline{w}_k^H \underline{\underline{B}}_k \underline{w}_k \quad (4)$$

(using $z^*z \equiv z^H z = \mathrm{Re}\{z\}^2 + \mathrm{Im}\{z\}^2 = |z|^2 \; \forall \; z \in C$),
wherein M is the number of interferers and the complex-valued N×N-dimensional undesired spatial covariance matrix $\underline{B}_k$ is defined as the outer product of the summed interference channel vectors:

$$\underline{\underline{B}}_k := \begin{pmatrix} \underline{\underline{B}}_k' & \underline{0} \\ \underline{0} & \underline{0} \end{pmatrix} \in C^{N \times N} \text{ with } \underline{\underline{B}}_k' := E\left\{\left(\sum_{j=0}^{M-1}\underline{b}_k^{(j)}\right)\left(\sum_{j=0}^{M-1}\underline{b}_k^{(j)}\right)^H\right\} \in C^{M \times M}. \quad (5)$$

Usually, the Rayleigh quotient $\Gamma_k$ is only defined when its denominator yields a value that is not zero, which implies that the matrix $\underline{B}_k$ should be positive definite and, consequently, all eigenvalues of $\underline{B}_k$, given by $\lambda_0, \lambda_1,..., \lambda_{(N-1)}$, are greater than zero:

$$\forall \; \underline{w}_k \neq \underline{0}: \; \underline{w}_k^H \underline{\underline{B}}_k \underline{w}_k > 0 \Leftrightarrow \bigwedge_{i=0}^{N-1} (\lambda_i > 0). \quad (6a)$$

In the underlying invention it is assumed that $\underline{B}_k$ is not positive definite (that means $\underline{B}_k$ is negative semi-definite):

$$\exists \; \underline{w}_k \neq \underline{0}: \; \underline{w}_k^H \underline{\underline{B}}_k \underline{w}_k \leq 0 \Leftrightarrow \exists \; \lambda_i \leq 0, \quad (6b)$$

thereby including the cases that the Rayleigh coefficient $\Gamma_k$ is infinite ($\Gamma_k \to -\infty$). It is further assumed that the matrix $\underline{B}_k$ has at least one eigenvector $\lambda_i = 0$ and one dimension of null space. These cases can occur when the matrix $\underline{B}_k$ has not full rank (rank $\underline{B}_k' = M < N = $ rank $\underline{B}_k$) since the number of interferers M is less than the number of antennas N. This means in example: If the number of interferes M is greater than the number of antennas N, only $M^* := N-1$ major interferers can maximally be chosen.

As mentioned above, one of the objects of this invention is to maximize the carrier-to-interference ratio (CIR) denoted by the Rayleigh quotient $\Gamma_k$. For this purpose the denominator $\underline{w}_k^H \underline{B}_k \underline{w}_k$ of $\Gamma_k$ is minimized first. After that, the antenna weighting vector $\underline{w}_k$ is chosen in such a way that the numerator $\underline{w}k^H \underline{A}_k \underline{w}_k$ of $\Gamma_k$ becomes a maximum, thereby keeping the denominator $\underline{w}_k^H B_k \underline{w}_k$ of $\Gamma_k$ at the already obtained minimum.

The complex-valued antenna weighting vector $\underline{W}_k^{opt}$ maximizing said Rayleigh quotient $\Gamma_k$ is given by

$$\underline{w}_k^{opt} = \arg \max_{\underline{w}_k} \{\Gamma_k\} = \arg \max_{\underline{w}_k} \left\{ \frac{\underline{w}_k^H \underline{\underline{A}}_k \underline{w}_k}{\underline{w}_k^H \underline{\underline{B}}_k \underline{w}_k} \right\} \quad (\text{for } \underline{w}_k \neq \underline{0}). \quad (7a)$$

Equation (7a) leads to a generalized eigenvalue problem, given by

$$\underline{\underline{A}}_k \underline{q}_k = \lambda_k \cdot \underline{\underline{B}}_k \underline{q}_k. \quad (7b)$$

Thereby, it can be shown that the antenna weighting vector $\underline{w}_k^{opt}$ that maximizes the CIR given by said Rayleigh quotient $\Gamma_k$ in equation (7a) is the so-called dominating generalized eigenvector $\underline{q}_k^{dom}$ associated with the largest generalized eigen-value $\lambda_k^{max}$ of the matrix pair $[\underline{A}_k, \underline{B}_k]$.

In order to keep the power $\underline{w}_k^H \underline{B}_k \underline{w}_k$ of the interference at a minimum, the antenna vector $\underline{w}_k$ is chosen from the orthogonal complement $\beta_k^\perp$ of the space

$$\beta_k := \text{span}\{\underline{b}_k^{(j)} \mid 0 \leq j \leq M-1\} \subset C^N, \quad (8)$$

which is spanned by the interference vectors $\underline{b}_k^{(j)}$, wherein $\beta_k^\perp$ is defined as follows:

$$\beta_k^\perp := \{\underline{w}_k \mid (\underline{w}_k \in C^N) \wedge (\underline{w}_k \perp \underline{b}_k^{(j)} \; \forall \; \underline{b}_k^{(j)} \in \beta_k)\}, \quad (9)$$

wherein $\underline{w}_k \perp \underline{b}_k^{(j)} \Leftrightarrow \underline{w}_k^H \underline{b}_k^{(j)} = 0$.

Then, in order to maximize the signal power $\underline{w}_k^H \underline{A}_k \underline{w}_k$ keeping the power of the interference $\underline{w}_k^H \underline{B}_k \underline{w}_k$ at a minimum, the antenna weighting vector $\underline{w}_k$ is defined as the projection of the signal channel vector $\underline{a}_k$ onto the orthogonal complement of the interference channel vector $\underline{b}_k^{(j)}$.

In case of one interferer (M = 1), antenna weighting vectors $\underline{w}_k$ obtained by means of the following equation maximize the carrier-to-interference ratio (CIR):

$$\text{Step } \#0: \quad \underline{w}_k^{(0)} := \underline{a}_k; \quad (10a)$$

$$\text{Step \#1:}\quad \underline{w}_k \equiv \underline{w}_k^{(1)} := \underline{w}_k^{(0)} - \text{proj}\left(\underline{w}_k^{(0)} \mid \underline{b}_k^{(0)}\right)$$

$$= \underline{w}_k^{(0)} - \underline{w}_k^{(0)^H} \underline{b}_k^{(0)} \cdot \frac{\underline{b}_k^{(0)}}{\|\underline{b}_k^{(0)}\|_2^2} \, ; \tag{10b}$$

$$\text{with } \text{proj}\left(\underline{w}_k^{(0)} \mid \underline{b}_k^{(0)}\right) := \underline{w}_k^{(0)^H} \underline{b}_k^{(0)} \cdot \frac{\underline{b}_k^{(0)}}{\|\underline{b}_k^{(0)}\|_2^2} \tag{10c}$$

and the Euclidian distance $\|\underline{b}_k^{(0)}\|_2 := \sqrt{\underline{b}_k^{(0)^H} \underline{b}_k^{(0)}} = \sqrt{\sum_{i=0}^{N-1} b_{k,n}^{(0)\,2}}$ .

Equation (10c) can easily be proved by means of the following geometrical facts (assuming that $\underline{w}_k^{(0)} \neq \underline{0}$ and $\underline{b}_k^{(0)} \neq \underline{0}$):

$$\sphericalangle\left(\underline{w}_k^{(0)}, \underline{b}_k^{(0)}\right) = \arccos\left(\frac{\underline{w}_k^{(0)^H} \underline{b}_k^{(0)}}{\|\underline{w}_k^{(0)}\|_2 \cdot \|\underline{b}_k^{(0)}\|_2}\right) =$$

$$= \arccos\left(\frac{\sum_{i=0}^{N-1} w_{k,i}^{(0)^*} \cdot b_{k,i}^{(0)}}{\sqrt{\sum_{i=0}^{N-1} w_{k,i}^{(0)\,2}} \cdot \sqrt{\sum_{i=0}^{N-1} b_{k,i}^{(0)\,2}}}\right), \tag{11a}$$

$$\sphericalangle\left(\underline{w}_k^{(0)}, \underline{p}_k^{(0)}\right) = \arccos\left(\frac{\|\underline{p}_k^{(0)}\|_2}{\|\underline{w}_k^{(0)}\|_2}\right) = \arccos\left(\frac{\sqrt{\sum_{i=0}^{N-1} p_{k,i}^{(0)\,2}}}{\sqrt{\sum_{i=0}^{N-1} w_{k,i}^{(0)\,2}}}\right), \tag{11b}$$

$$\sphericalangle\left(\underline{w}_k^{(0)}, \underline{b}_k^{(0)}\right) \equiv \sphericalangle\left(\underline{w}_k^{(0)}, \underline{p}_k^{(0)}\right), \tag{11c}$$

$$\underline{e}_{b,k}^{(0)} = \frac{\underline{b}_k^{(0)}}{\|\underline{b}_k^{(0)}\|_2} \quad (\text{with } \|\underline{e}_{b,k}^{(0)}\|_2 = 1), \text{ and} \tag{11d}$$

$$\underline{p}_k^{(0)} = \| \underline{p}_k^{(0)} \|_2 \cdot \underline{e}_{b,k}^{(0)} , \tag{11e}$$

wherein

$$\sphericalangle\left(\underline{w}_k^{(0)}, \underline{b}_k^{(0)}\right) \in [0°;180°]$$ denotes the angle between $\underline{w}_k^{(0)}$ and $\underline{b}_k^{(0)}$,

$$\sphericalangle\left(\underline{w}_k^{(0)}, \underline{p}_k^{(0)}\right) \in [0°;180°]$$ denotes the angle between $\underline{w}_k^{(0)}$ and $\underline{p}_k^{(0)}$,

$$\underline{e}_{b,k}^{(0)}$$ is the unit vector in the direction of $\underline{b}_k^{(0)}$,

$$\underline{p}_k^{(0)} \equiv \text{proj}\left(\underline{w}_k^{(0)} \mid \underline{b}_k^{(0)}\right)$$ is the projection of $\underline{w}_k^{(0)}$ onto $\underline{b}_k^{(0)}$,

'*'  denotes the complex conjugate operation,

'H'  denotes the complex conjugate transpose operation, and

$\|\cdot\|_2$  denotes the Euclidian length of a vector argument.

After the last step, when the projection of the signal channel vector $\underline{a}_k$ onto the orthogonal complement of all interference channel vectors $\underline{b}_k^{(j)}$ (for $j \in \{0, 1\}$) is finished, the obtained antenna weighting vector $\underline{w}_k^{(1)}$ should be normalized again:

$$\underline{w}_k := \frac{\underline{w}_k^{(1)}}{\| \underline{w}_k^{(1)} \|_2} .$$

If there are two or more interferers ($M \geq 2$) with known interference channel vectors, then the antenna weighting vector $\underline{w}_k$ can be chosen from the orthogonal complement of all M interference channel vectors, until the number of interferers M is smaller than the number of antennas N.

The interference channel vectors $\underline{b}_k^{(j)}$ are assumed to be linearly independent, but normally they are not orthogonal to each other. Therefore, an orthogonalization procedure of the respective interference channel vectors $\underline{b}_k^{(j)}$ should be performed before calculating the antenna weighting vectors $\underline{w}_k$.

The following equations yield the antenna weighting vectors $\underline{w}_k$ which are needed to achieve a maximization of the carrier-to-interference ratio (CIR) in case of two or more interferers ($M \geq 2$) with known interference channel vectors:

$$\text{Step \#0:} \qquad \underline{w}_k^{(0)} := \underline{a}_k; \tag{12a}$$

$$\text{Step \#1:} \qquad \underline{w}_k^{(1)} := \underline{w}_k^{(0)} - \text{proj}\left(\underline{w}_k^{(0)} \mid \underline{b}_k^{(0)}\right) = \underline{w}_k^{(0)} - \underline{w}_k^{(0)H} \underline{b}_k^{(0)} \cdot \underline{u}_k^{(0)}, \tag{12b}$$

wherein

$$\mathrm{proj}\left(\underline{w}_k^{(0)} \mid \underline{b}_k^{(0)}\right) \; := \; \underline{w}_k^{(0)^H} \underline{b}_k^{(0)} \cdot \underline{u}_k^{(0)} \; \text{ and } \; \underline{u}_k^{(0)} \; := \; \frac{\underline{b}_k^{(0)}}{\|\underline{b}_k^{(0)}\|_2^2} \; ;$$

Step #M:
$$\underline{w}_k \equiv \underline{w}_k^{(M)}$$

$$:= \; \underline{w}_k^{(0)} - \sum_{j=0}^{M-1} \mathrm{proj}\left(\underline{w}_k^{(0)} \mid \underline{b}_k^{(j)}\right) \; = \; \underline{w}_k^{(0)} - \sum_{j=0}^{M-1} \underline{w}_k^{(0)^H} \underline{b}_k^{(j)} \cdot \underline{u}_k^{(j)}$$

$$= \; \underline{w}_k^{(M-1)} - \mathrm{proj}\left(\underline{w}_k^{(0)} \mid \underline{b}_k^{(M-1)}\right) \; = \; \underline{w}_k^{(M-1)} - \underline{w}_k^{(0)^H} \underline{b}_k^{(M-1)} \cdot \underline{u}_k^{(M-1)} \quad (12c)$$

(with M < N), wherein

$$\mathrm{proj}\left(\underline{w}_k^{(0)} \mid \underline{b}_k^{(j)}\right) \; := \; \underline{w}_k^{(0)^H} \underline{b}_k^{(j)} \cdot \underline{u}_k^{(j)} \; \text{ and } \; \underline{u}_k^{(j)} \; := \; \frac{\underline{b}_k^{(j)}}{\|\underline{b}_k^{(j)}\|_2^2} \; .$$

Thereby, $\underline{u}_k^{(j)}$ denotes the normalized orthonormal base of the space $\beta_k^{(j)}$ which is spanned by the interference vectors $\underline{b}_k^{(0)}$, $\underline{b}_k^{(1)}$, ..., $\underline{b}_k^{(j)}$, and proj ( $\underline{w}_k^{(0)} \mid \underline{b}_k^{(j)}$ ) represents the orthogonal projection of $\underline{w}_k^{(0)}$ onto $\underline{b}_k^{(j)}$.

After the last step, when the projection of the signal channel vector $\underline{a}_k$ onto the orthogonal complement of all interference channel vectors $\underline{b}_k^{(j)}$ (for $j \in \{0, 1, 2, ..., M\}$) is finished, the obtained antenna weighting vector $\underline{w}_k^{(M)}$ should be normalized again:

$$\underline{w}_k \; := \; \frac{\underline{w}_k^{(M)}}{\|\underline{w}_k^{(M)}\|_2} \; .$$

For a generation of the antenna weighting vectors $\underline{w}_k$ for each subcarrier k only selected major interferer(s) can be considered; minor interferer(s) must be neglected as mentioned above. In this case, the normalized orthonormal bases $\underline{u}_k^{(j)}$ can be chosen from previously selected interferer(s).

Even though the antenna weighting vectors $\underline{w}_k$ are chosen in such a way that the Rayleigh quotient $\Gamma_k$ becomes infinite, the same ratio including noise power $\sigma_k^2 \cdot I$ for the k-th sub-carrier,

$$\Gamma_k' \; := \; \frac{\underline{w}_k^{H} \underline{\underline{A}}_k \underline{w}_k}{\underline{w}_k^{H} \underline{\underline{B}}_k \underline{w}_k + \sigma_k^2 \cdot I} \; \in \; C, \quad (13)$$

which corresponds to the carrier-to-interference-plus-noise ratio (CINR), can be smaller compared with that obtained by means of another antenna weighting vector. This can happen if the signal channel vector $\underline{a}_k$ is highly correlated to one or more interefernce channel vectors $\underline{b}_k^{(j)}$.

In such cases, the antenna weighting vectors $\underline{w}_k$ for each sub-carrier k (for k = 0, 1,..., K-1) can be found as follows:

Initially, the antenna weighting vector $\underline{w}_k$ is set to the associated signal channel vector $\underline{a}_k$ (Step #0). Next, $\underline{w}_k$ is gradually modified by removing parts of $\underline{a}_k$ which fall onto each orthogonal base $\underline{u}_k^{(j)}$ of interference (Step #1 to Step #(M-1)). Each time the orthogonal projection $\mathrm{proj}\left(\underline{a}_k \mid \underline{b}_k^{(j)}\right)$ of $\underline{a}_k$ onto $\underline{b}_k^{(j)}$ is subtracted as shown above, the Rayleigh quotient $\Gamma_k'$ is compared before and after said subtraction. I·f $\Gamma_k'$ becomes smaller, the subtraction of $\mathrm{proj}\left(\underline{a}_k \mid \underline{b}_k^{(j)}\right)$ is abandoned.

In general, the efficiency of the antenna weighting vectors $\underline{w}_k$ depends on the choice of the normalized orthonormal bases $\underline{u}_k^{(j)}$. In any case, the ratio given by the Rayleigh quotient $\Gamma_k'$ can be improved, however, since only adequate bases $\underline{u}_k^{(j)}$ are used to generate the antenna weighting vectors $\underline{w}_k$.

In the following section, an example is given presenting a method how normalized orthonormal bases can be obtained that can be applied to generate the antenna weighting vectors $\underline{w}_k$. In the literature this method is is known as Gram-Schmidt orthogonalization procedure.

In a first step, the first normalized base $\underline{u}_k^{(0)}$ is derived from the interference channel vector $\underline{b}_k^{(0)}$ of the most dominant interferer:

$$\underline{u}_k^{(0)} := \frac{\underline{b}_k^{(0)}}{\parallel \underline{b}_k^{(0)} \parallel_2^2} . \quad (14a)$$

Next, the second normalized base $\underline{u}_k^{(1)}$ is chosen from the orthogonal complement of $\underline{u}_k^{(0)}$ and adjusted, in order to maximize the second dominant interference channel vector $\underline{b}_k^{(1)}$:

$$\mathrm{Step \ \#1:} \quad \underline{u}_k^{(1)} := \frac{\underline{b}_k^{(1)} - \mathrm{proj}\left(\underline{b}_k^{(1)} \mid \underline{b}_k^{(0)}\right)}{\parallel \underline{b}_k^{(1)} - \mathrm{proj}\left(\underline{b}_k^{(1)} \mid \underline{b}_k^{(0)}\right)\parallel_2^2}$$

$$= \frac{\underline{b}_k^{(1)} - \underline{b}_k^{(1)^H}\underline{b}_k^{(0)} \cdot \underline{u}_k^{(0)}}{\parallel \underline{b}_k^{(1)} - \underline{b}_k^{(1)^H}\underline{b}_k^{(0)} \cdot \underline{u}_k^{(0)} \parallel_2^2} \quad (14b)$$

wherein $\mathrm{proj}\left(\underline{b}_k^{(1)} \mid \underline{b}_k^{(0)}\right) := \underline{b}_k^{(1)^H}\underline{b}_k^{(0)} \cdot \underline{u}_k^{(0)} ;$

$$\text{Step \#j:} \quad \underline{u}_k^{(j)} := \frac{\underline{b}_k^{(j)} - \sum_{i=0}^{j-1} \text{proj}\left(\underline{b}_k^{(j)} \mid \underline{b}_k^{(i)}\right)}{\| \underline{b}_k^{(j)} - \sum_{i=0}^{j-1} \text{proj}\left(\underline{b}_k^{(j)} \mid \underline{b}_k^{(i)}\right)\|_2^2}$$

$$= \frac{\underline{b}_k^{(j)} - \sum_{i=0}^{j-1} \underline{b}_k^{(j)H} \underline{b}_k^{(i)} \cdot \underline{u}_k^{(i)}}{\| \underline{b}_k^{(j)} - \sum_{i=0}^{j-1} \underline{b}_k^{(j)H} \underline{b}_k^{(i)} \cdot \underline{u}_k^{(i)} \|_2^2} \qquad (14c)$$

wherein $\text{proj}\left(\underline{b}_k^{(j)} \mid \underline{b}_k^{(i)}\right) := \underline{b}_k^{(j)H} \underline{b}_k^{(i)} \cdot \underline{u}_k^{(i)}$ ;

$$\text{Step \#(M-1):} \quad \underline{u}_k^{(M-1)} := \frac{\underline{b}_k^{(M-1)} - \sum_{i=0}^{M-2} \text{proj}\left(\underline{b}_k^{(M-1)} \mid \underline{b}_k^{(i)}\right)}{\| \underline{b}_k^{(M-1)} - \sum_{i=0}^{M-2} \text{proj}\left(\underline{b}_k^{(M-1)} \mid \underline{b}_k^{(i)}\right)\|_2^2}$$

$$= \frac{\underline{b}_k^{(M-1)} - \sum_{i=0}^{M-2} \underline{b}_k^{(M-1)H} \underline{b}_k^{(i)} \cdot \underline{u}_k^{(i)}}{\| \underline{b}_k^{(M-1)} - \sum_{i=0}^{M-2} \underline{b}_k^{(M-1)H} \underline{b}_k^{(i)} \cdot \underline{u}_k^{(i)} \|_2^2} \qquad (14d)$$

wherein $\text{proj}\left(\underline{b}_k^{(M-1)} \mid \underline{b}_k^{(i)}\right) := \underline{b}_k^{(M-1)H} \underline{b}_k^{(i)} \cdot \underline{u}_k^{(i)}$ .

In order to calculate this set of normalized orthonormal bases,

$\underline{U}_k := [\underline{u}_k^{(0)}, \ldots, \underline{u}_k^{(j)}, \ldots, \underline{u}_k^{(M-1)}] \in C^{M \times M}$, in a more efficient way, the algorithm can be simplified as follows:

$$\text{Step \#0:} \quad \underline{u}_k^{(0)} := \frac{\underline{b}_k^{(0)}}{\underline{b}_k^{(0)H} \underline{b}_k^{(0)}} . \qquad (15a)$$

$$\text{Step \#1:} \quad \underline{b}_{k,TMP}^{(1)} := \underline{b}_k^{(1)} - \text{proj}\left(\underline{b}_k^{(1)} \mid \underline{b}_k^{(0)}\right) \text{ and}$$

$$\underline{u}_k^{(1)} := \frac{\underline{b}_{k,TMP}^{(1)}}{\underline{b}_{k,TMP}^{(1)H} \underline{b}_{k,TMP}^{(1)}} , \qquad (15b)$$

wherein $\text{proj}\left(\underline{b}_k^{(1)} \mid \underline{b}_k^{(0)}\right) := \underline{b}_k^{(1)H}\underline{b}_k^{(0)} \cdot \underline{u}_k^{(0)}$ ;

$$\text{Step } \#j: \quad \underline{b}_{k,TMP}^{(j)} := \underline{b}_k^{(j)} - \sum_{i=0}^{j-1} \text{proj}\left(\underline{b}_k^{(j)} \mid \underline{b}_k^{(i)}\right) \text{ and}$$

$$\underline{u}_k^{(j)} := \frac{\underline{b}_{k,TMP}^{(j)}}{\underline{b}_{k,TMP}^{(j)H}\underline{b}_{k,TMP}^{(j)}}, \tag{15c}$$

wherein $\text{proj}\left(\underline{b}_k^{(j)} \mid \underline{b}_k^{(i)}\right) := \underline{b}_k^{(j)H}\underline{b}_k^{(i)} \cdot \underline{u}_k^{(i)}$ ;

$$\text{Step } \#(M-1): \quad \underline{b}_{k,TMP}^{(M-1)} := \underline{b}_k^{(M-1)} - \sum_{i=0}^{M-2} \text{proj}\left(\underline{b}_k^{(M-1)} \mid \underline{b}_k^{(i)}\right)$$

$$\text{and } \underline{u}_k^{(M-1)} := \frac{\underline{b}_{k,TMP}^{(M-1)}}{\underline{b}_{k,TMP}^{(M-1)H}\underline{b}_{k,TMP}^{(M-1)}}, \tag{15d}$$

wherein $\text{proj}\left(\underline{b}_k^{(M-1)} \mid \underline{b}_k^{(i)}\right) := \underline{b}_k^{(M-1)H}\underline{b}_k^{(i)} \cdot \underline{u}_k^{(i)}$ .

This antenna weighting vector generation method is applied to each subcarrier k of the OFDM multi-carrier signal, thereby optimizing the total OFDM multi-carrier signal. As can be seen from equations (15a) to (15d), the underlying invention manages with one inner product operation and one vector subtraction for each interference cancellation - in contrast to the present state of the art.

Another advantage of the underlying invention is that the above described method can easily and profitably be applied to Wireless Local Area Networks (W-LANs), in which high bit rates at a rather low mobility of the participants are required.

The generated antenna weighting vectors $\underline{w}_k$ can also be used for the transmission of TDD signals. By applying the method described above in the transmitter, the access points (APs) can be enabled to extinguish or reduce a signal at specific points where the signal is not required. For example, the signal can be extinguished at specific points where mobile terminals (MTs) are communicating with another AP.

When antenna weighting vectors as calculated above are applied to an antenna diversity scheme in the transmitter, the distributed transmit signal, $y_k := E\{\underline{w}_k^{H}\underline{x}_k\}$ $(0 \le k \le K-1)$, can also be divided by the inner product of the antenna weighting vector $\underline{w}_k$ with the signal channel vector $\underline{a}_k$:

$$y_k' = \frac{E\{\underline{w}_k^{H}\underline{x}_k\}}{E\{\underline{w}_k^{H}\underline{a}_k\}} = \frac{E\left\{\sum_{i=0}^{N-1} w_{k,i}^{*} \cdot x_{k,i}\right\}}{E\left\{\sum_{i=0}^{N-1} w_{k,i}^{*} \cdot a_{k,i}\right\}}. \tag{16}$$

By applying this operation to each subcarrier k, the receiver is enabled to receive equal subcarrier power. Thereby, the obtained signal $y_k'$ can also be distributed.

# EP 1 276 251 B1

Due to said distribution of the transmitted signal, sometimes a very high transmit power is needed for several subcarriers. However, the total transmit power from all antenna elements of a mobile transmitter can also be limited to a predefined threshold. Instead of limiting this transmit power, the underlying modulation scheme can be replaced by a simpler one, or those subcarriers can not be used at all. Therefore, as can be taken from the previous European patent application No. 00 125 435.8, so-called "load swapping" techniques can be employed. These techniques compensate OFDM symbols represented by a reduced bit sequence by changing the modulation scheme of other subcarriers to a more complex scheme which allows to transmit data at a higher data rate. Thereby, the modulation scheme of subcarriers having a power level higher than a predefined threshold is increased, whereas simultaneously the modulation scheme of subcarriers having a power level lower than a predefined threshold is decreased. Usually, the total number of used subcarriers remains unchanged, and the total number of coded bits per OFDM symbol is maintained.

The antenna weighting vectors can also advantageously be applied to duplex methods used for mobile radio communication. Thereby, access points (APs) can independently communicate with a plurality of mobile terminals (MTs) at the same frequency and time by using orthogonal antenna weighting vectors for each MT. For the purpose of duplex operation, all orthogonal bases referring to the undesired signal channel vector space should be removed from the required signal channel vector $\underline{a}_k$. Theoretically, one AP can accommodate as many MTs as there are antenna elements.

BRIEF DESCRIPTION OF THE CLAIMS

In general, those skilled in the art will readily recognize that the realization of the underlying invention is not restricted to the above-described examples. Many modifications and variations may be made to the embodiments of the underlying invention disclosed herein without substantially departing from the scope of the invention as defined in the following claims.

The independent patent claim 1 and the dependent claims 2. to 10 refer to a mobile transmission system.

In addition, the independent patent claim 11 and the dependent claims 12 to 20 relate to a method for supporting a mobile transmission system as described above.

The dependent patent claim 21 refers to a mobile telecommunications device which supports a mobile transmission system according to anyone of the claims 1 to 10.

Furthermore, the independent patent claim 22 refers to a mobile telecommunications device which comprises a mobile transmitter and/or a mobile receiver designed for supporting a method according to anyone of the claims 11 to 20.

Finally, the independent patent claim 23 relates to a computer program, which performs, when executed by a processor of a mobile telecommunication device, a method according to anyone of the claims 11 to 20.

BRIEF DESCRIPTION OF THE DRAWINGS

Further advantages and suitabilities of the underlying invention result from the subordinate claims as well as from the following description of the preferred embodiment of the invention which is depicted in the following drawings. In this case shows

FIG. 1　　a block diagram of the receiver comprising means for performing an interference cancellation in ac- cordance with the preferred embodiment of the un- derlying invention,

FIG. 2　　a block diagram of the transmitter comprising means for performing an interference cancellation in accordance with the preferred embodiment of the underlying invention, wherein a beamforming algo- rithm is used for maximizing the energy trans- mitted in direction of the desired mobile terminal MT1 and steering nulls in direction of the inter- fering mobile terminal MT2,

FIG. 3　　a situation in which a first access point AP1 has to independently estimate interferences coming from an interfering mobile terminal MT2 in order to steer nulls in direction of said mobile terminal MT2,

FIG. 4　　a block diagram for a mobile transmission system supporting wireless communication over a mobile radio channel by means of a pilot-assisted wireless multi-carrier system considering channel estimation and equalization,

FIG. 5a　　a detailed view of the OFDM modulator,

FIG. 5b　　a detailed view of the OFDM demodulator

FIG. 6　　an example for performing a frequency-domain channel estimation in the receiver by means of preamble

**20**

symbols,

FIG. 7 a scheme for individually applying antenna weight- ing vectors to all subcarriers,

FIG. 8 a situation in which one access point AP can transmit different signals to two different mobile stations MT1 and MT2, respectively, at the same frequency and time, and

FIG. 9 a flow chart of an example for choosing the optimum antenna weighting vector according to the preferred embodiment of the underlying invention.

DETAILED DESCRIPTION OF THE UNDERLYING INVENTION

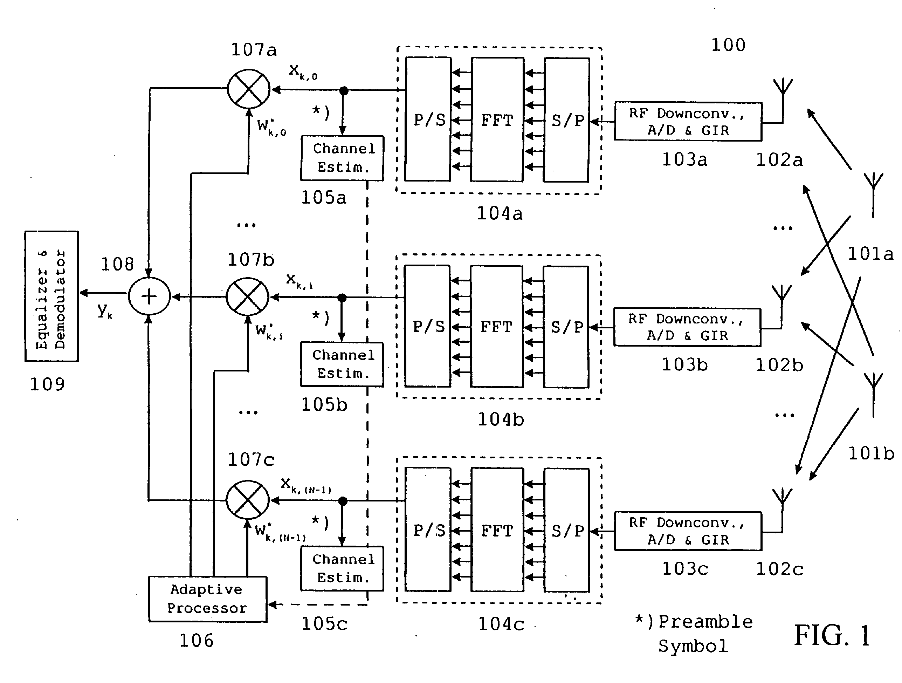

In the following the functions of the features comprised in the preferred embodiment of the underlying invention as depicted in Figs. 1 to 9 are explained.

Fig. 1 shows a block diagram of the receiver 100 in accordance with the preferred embodiment of the underlying invention. It comprises means for performing a channel estimation 105a-c and channel equalization 109. For the RF signals received at each of the antennas 102a-c the same operations are performed. In the following, the operations performed for the signal received at antenna 102b shall representatively be described. At first, the RF signal received at antenna 102b is submitted to a module 103b which performs a downconversion to the baseband, an analog-digital conversion and a removal of the guard interval preceding said signal. After that, the OFDM demodulation can be performed by means of a combined module 104b comprising a serial-to-parallel converter (S/P), a digital signal processor performing a Fast Fourier Transform (FFT) and a parallel-to-serial converter (P/S). The obtained data vector element $x_{k,i}$ is then weighted by means of a receive (RX) antenna weighting vector element $w_{k,i}$ calculated by means of an adaptive processor 106. Thereby, said receive (RX) antenna weighting vector element $w_{k,i}$ is supplied by the channel estimator 105b having the data vector element $x_{k,i}$ as input signal. With the aid of the mixers 107a-c and the summation element 108 an inner product is calculated yielding the scalar signal output $y_k := \underline{w}_k^H \underline{x}_k$ which can be submitted to an equalizer 109. Thereby, the receive (RX) antenna weighting vector $\underline{w}_k$ is adaptively updated by means of the adaptive processor 106.

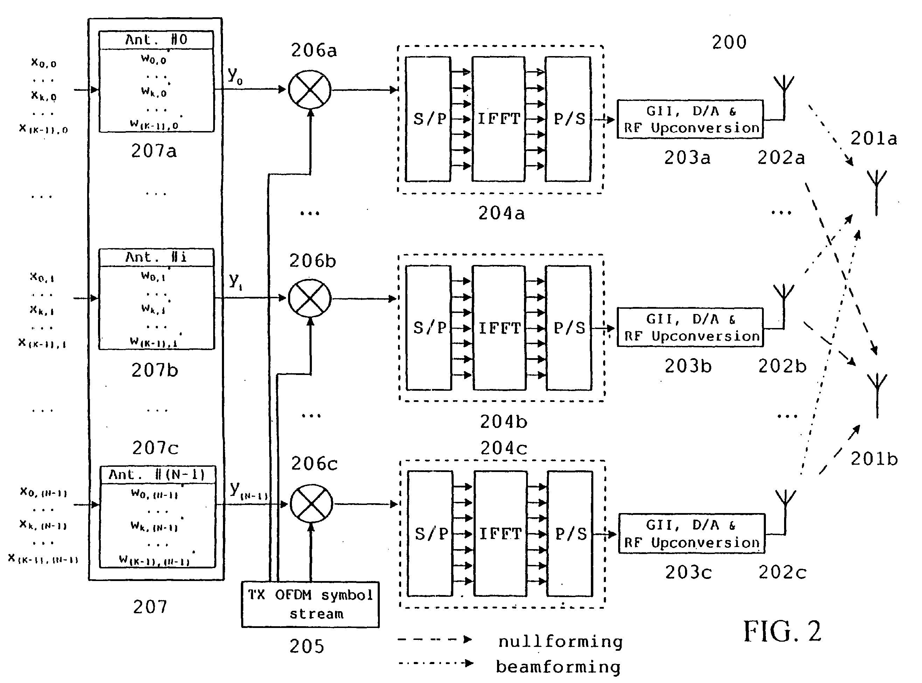

Fig. 2 exhibits a block diagram of the transmitter 200 comprising means 207 for performing an interference cancellation in accordance with the preferred embodiment of the underlying invention. Thereby, a beamforming algorithm is used for maximizing the energy transmitted in direction of the desired mobile terminal 201a (MT1) and steering nulls in direction of the interfering mobile terminal 201b (MT2). Again, for the RF signals transmitted from each of the antennas 202a-c the same operations are performed. In the following, the operations performed for the signal transmitted from antenna 202b shall representatively be described. At first, the OFDM symbol stream 205 to be transmitted from each antenna 202a-c is weighted with the aid of transmit (TX) antenna weighting vectors obtained from module 207. After that, the OFDM modulation can be performed by means of a combined module 204b comprising a serial-to-parallel converter (S/P), a digital signal processor performing an Inverse Fast Fourier Transform (IFFT) and a parallel-to-serial converter (P/S). After the OFDM modulation a combined module 203b serves to insert a guard interval, to perform a digital-to-analog conversion and a RF upconversion of the signal to be transmitted from antenna 202b.

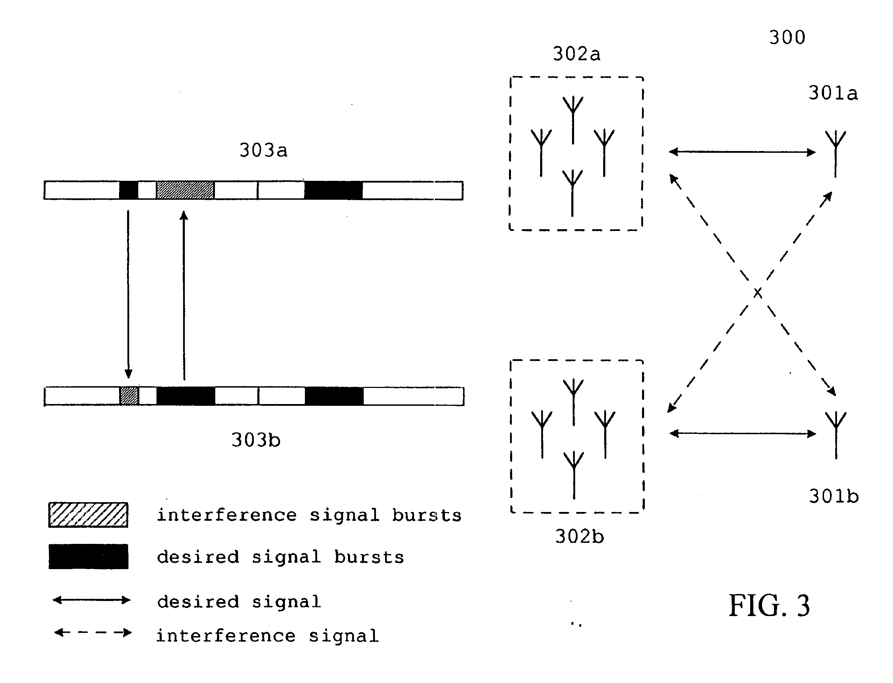

Fig. 3 shows a situation 300 in which a first access point 302a (AP1) has to independently estimate interferences coming from an interfering mobile terminal 301b (MT2) in order to steer nulls in direction of said mobile terminal 301b (MT2). Likewise, Fig. 3 shows a situation in which a second access point 302b (AP2) has to independently estimate interferences coming from an interfering mobile terminal 301a (MT1) in order to steer nulls in direction of said mobile terminal 301a (MT1). Thereby, the access points 302a (AP1) and 302b (AP2) can co-operate by exchanging specific signal bursts contained in their signal sequences 303a and 303b, respectively.

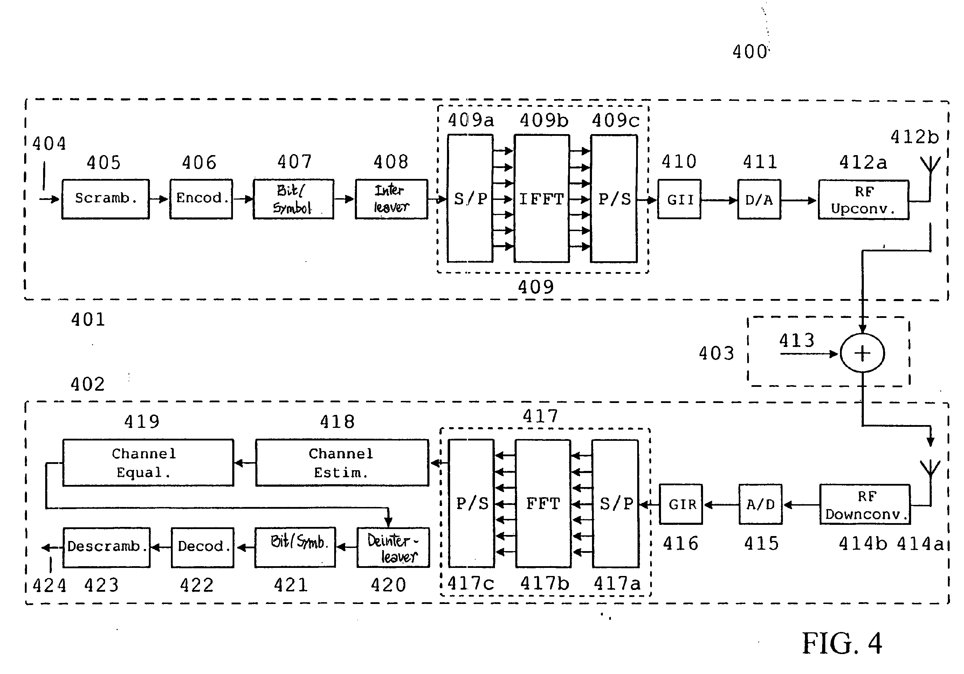

Fig. 4 refers to a block diagram 400 for the employed mobile transmission system comprising one mobile transmitter 401 and one mobile receiver 402 for supporting wireless communication over a mobile radio channel by means of a pilot-assisted wireless multi-carrier system considering channel estimation and equalization.

The input is a binary data stream 404 using any suitable modulation technique. At first, a scrambler 405 is used for randomizing the transmitted input data bits 404 in order to minimize interferences. After being submitted to an encoder 406 and a bit-to-symbol mapper 407 followed by an interleaver 408, the data is then transformed into a multilevel signal to be prepared for an OFDM modulation 409. When the serial data stream is converted to parallel by means of the serial-parallel converter 409a, the data rate gets reduced by K, where K is the number of parallel subchannels used for the applied OFDM modulation. Hence, these parallel channels are essentially low data rate channels, and since they are narrow-band channels they experience flat fading. This is the greatest advantage of the applied OFDM technique. To obtain orthogonality between the subcarriers, the data symbols are mapped to the subcarriers using an Inverse Fast Fourier Transform (IFFT) performed by a digital signal processor 409b, and reconverted to serial by means of a parallel-serial converter 409c. After OFDM modulation a guard interval is inserted with the aid of the guard interval insertion unit 410. The use of a cyclic prefix (CP) instead of a plain guard interval simplifies the channel equalization in the receiver.

Moreover, it is advantageous to maintain carrier synchronization in the receiver. Next, a signal windowing is performed in order to reduce the out-of-band radiation. Therefore, a raised-cosine window function is normally employed. The signal is then submitted to a digital-analog converter 411 to produce the analog baseband signal, modulated to the RF carrier wave by means of an RF upconversion unit 412a, amplified, and transmitted over the mobile radio channel 403. Thereby, the mobile radio channel 403 is assumed to be an Additive White Gaussian Noise (AWGN) channel. In the receiver the complementary operations are applied in reverse order. At first, the received RF signal is downconverted to the baseband by means of the RF downconverter 414b, and submitted to an analog-digital converter 415. When the guard interval is removed with the aid of the guard interval removal unit 416, the OFDM demodulation 417 can be performed. The data is then transformed into a multilevel signal to be prepared for an OFDM demodulation. After the serial data stream is converted to parallel by means of the serial-parallel converter 417a, all subcarriers are separated by applying a Fast Fourier Transform (FFT) performed by a digital signal processor 417b, and reconverted to serial by means of a parallel-serial converter 417c. After the performance of the channel estimation 418 and equalization 419, the data stream is submitted to a deinterleaver 420 followed by a symbol-to-bit mapper 421, a decoder 422, and a descrambler 423 to obtain the output data bits 424.

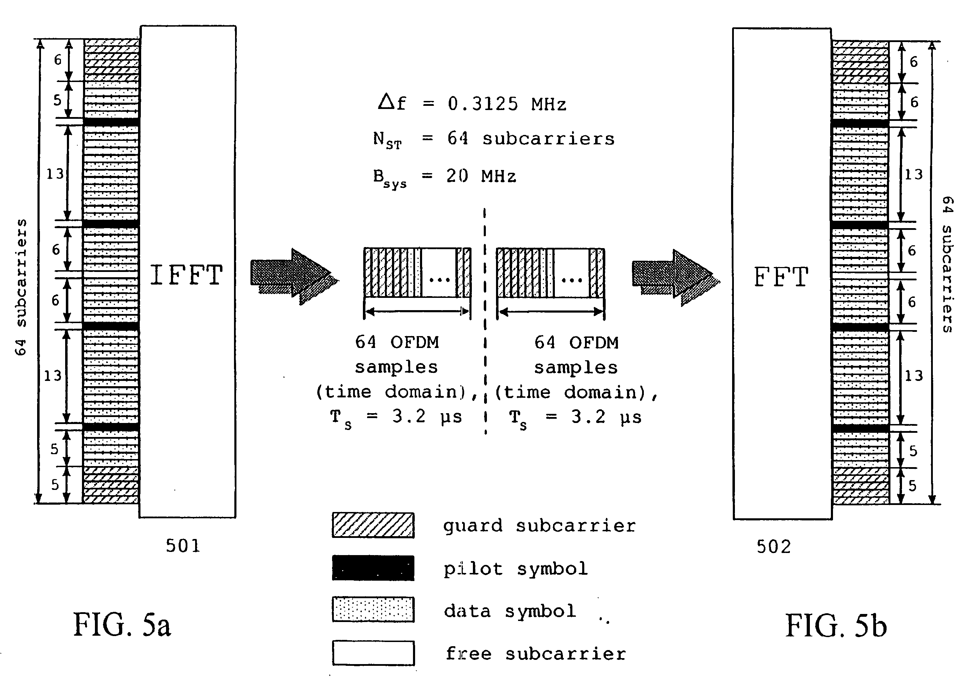

Figs. 5a and 5b exhibit a detailed view of the OFDM modulation 501 performed in the transmitter with multiplexing data symbols and pilot symbols, and the OFDM demodulation 502 performed in the receiver, respectively. Thereby, the data is modulated on $N_{ST}$ = 64 subcarriers by means of an Inverse Fast Fourier Transform (IFFT) in the transmitter, and demodulated by means of a Fast Fourier Transform (FFT) in the receiver. The applied OFDM parameters can be taken from the following table:

| OFDM Transmission Parameter | Prescribed Value |
|---|---|
| sampling period $\Delta t$ | $\Delta t$ = 50 ns |
| sampling rate $f_s$ | $f_s$ = 1 / $\Delta t$ = 20 MHz |
| symbol duration Ts | $T_s$ = 64·$\Delta t$ = 3.2 $\mu$s |
| guard interval $T_G$ (requires \| optional) | $T_G$ = 16·$\Delta t$ = 0.8 $\mu$s \| $T_G$ = 8·$\Delta t$ = 0.4 $\mu$s |
| symbol interval $T_{MC}$ (required I optional) | $T_{MC}$ = $T_s$ + $T_G$ = 80·$\Delta t$ = 4.0 $\mu$s \| $T_{MC}$ = $T_s$ + $T_G$ = 72·$\Delta t$ = 3.6 $\mu$s |
| number $N_{SD}$ of subcarriers for data signals | $N_{SD}$ = 48 |
| number $N_{SP}$ cf subcarriers for pilot signals | $N_{SP}$ = 4 |
| total number $N_{ST}$ of subcarriers | $N_{ST} \equiv K = N_{SD} + N_{SF}$ = 52 |
| subchannel spacing $\Delta f$ between the individual subcarriers | $\Delta f$ = 1 / $T_s$ = 0.3125 MHz |
| subchannel spacing B between the outer subcarriers | B = $N_{ST}$·$\Delta f$ = 16.25 MHz |
| system bandwidth $B_{sys}$ | $B_{sys}$ = 20 MHz |

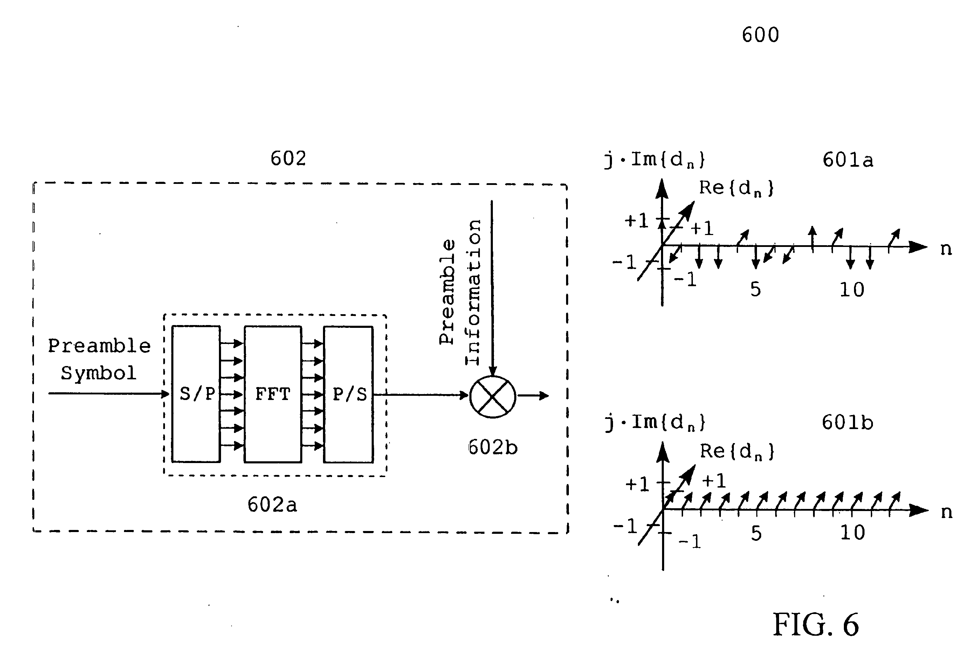

Fig. 6 shows an example 600 for performing a frequency-domain channel estimation in the receiver 100 by means of preamble symbols. Thereby, an alignment of the subcarrier phase is performed with a predetermined pattern, given by the respective receive (RX) antenna weighting vector element $w_{k,i}$ calculated by means of the adaptive processor 106. 601a is an example for an OFDM symbol stream before said alignment of the subcarrier phases; 601b shows the OFDM symbol stream after said alignment.

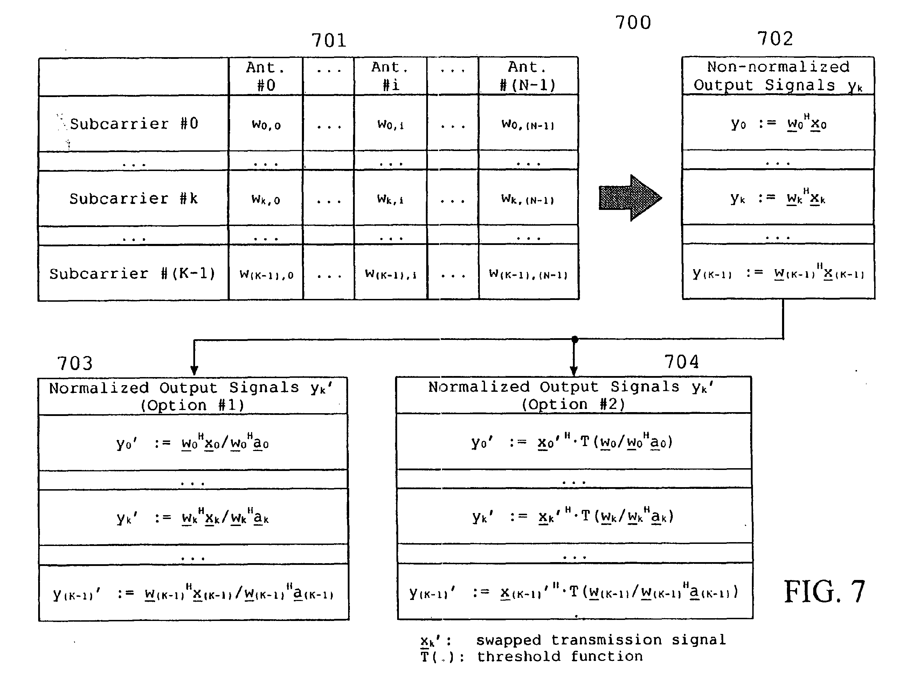

Fig. 7 presents a scheme 700 for individually applying antenna weighting vectors to all subcarriers. Thereby, pre-equalizing and load swapping techniques can optionally be added. 701 shows a matrix scheme comprising transmit (TX) antenna weighting vector elements for each subcarrier k (for $0 \leq k \leq K-1$) and transmit (TX) antenna i (for $0 \leq i \leq$ N-1) to maximize the carrier-to-interference ratio (CIR) given by the Rayleigh quotient $\Gamma_k$, or the carrier-to-interference-plus-noise ratio (CINR) given by the Rayleigh quotient $\Gamma_k$', respectively. These transmit (TX) antenna weighting vector elements are needed to generate the non-normalized scalar output signals $y_k$ (for $0 \leq k \leq K-1$) depicted in the vector scheme 702. Alternatively, vector scheme 703 comprising the distributed normalized output power for each subcarrier k to be transmitted in case of applying a magnitude adjustment for limiting said output power (= Option #1) can be employed, or vector scheme 704 comprising the distributed normalized output power for each subcarrier k to be trans-

mitted using a combined threshold and load swapping technique in order to limit said output power (= Option #2).

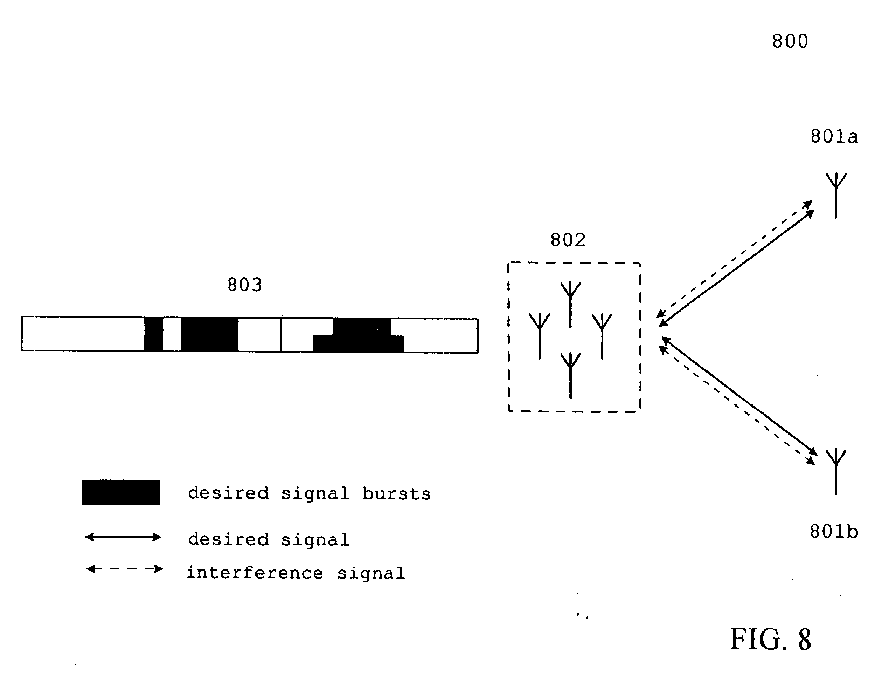

Fig. 8 exhibits a situation 800 in which one access point 802 (AP) can transmit different signals to two different mobile stations 801a (MT1) and 801b (MT2), respectively, at the same frequency and time. Therein, two mutually orthogonal antenna weighting vectors are employed to form null and beam, respectively.

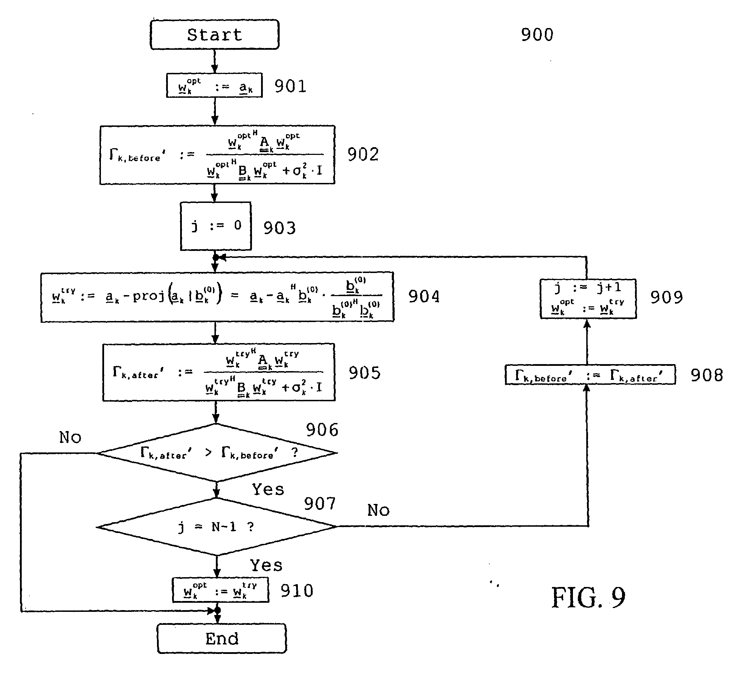

Fig. 9 shows a a flow chart 900 of an example for choosing the optimum antenna weighting vector according to the preferred embodiment of the underlying invention. It contains the algorithm as described above.

At first, an initialization 901 of the antenna weighting vector is performed by setting the antenna weighting vector to the associated signal channel vector:

$$\underline{w}_k^{opt} := \underline{a}_k.$$

Next, a calculation 902 of the Rayleigh quotient

$$\Gamma_{k,before}' := \frac{\underline{w}_k^{opt\,H} \underline{\underline{A}}_k \underline{w}_k^{opt}}{\underline{w}_k^{opt\,H} \underline{\underline{B}}_k \underline{w}_k^{opt} + \sigma_k^2 \cdot I}$$

representing the carrier-to-interference-plus-noise ratio (CINR) before subtracting the projection of the associated signal channel vector $\underline{a}_k$ onto the orthogonal base $\underline{u}_k^{(j)}$ of the associated interference channel vector $\underline{b}_k^{(j)}$ is done. After a reinitialization 903 of the interferer index (j := 0), a calculation 904 of a new antenna weighting vector by means of a first Gram-Schmidt orthogonalization procedure is executed:

$$\underline{w}_k^{try} := \underline{a}_k - \text{proj}\left(\underline{a}_k \mid \underline{b}_k^{(0)}\right) = \underline{a}_k - \underline{a}_k^{\,H} \underline{b}_k^{(0)} \cdot \frac{\underline{b}_k^{(0)}}{\underline{b}_k^{(0)\,H} \underline{b}_k^{(0)}}$$

with

$$\text{proj}\left(\underline{a}_k \mid \underline{b}_k^{(0)}\right) := \underline{a}_k^{\,H} \underline{b}_k^{(0)} \cdot \frac{\underline{b}_k^{(0)}}{\underline{b}_k^{(0)\,H} \underline{b}_k^{(0)}} = \underline{a}_k^{\,H} \underline{b}_k^{(0)} \cdot \frac{\underline{b}_k^{(0)}}{\| \underline{b}_k^{(0)} \|_2^2}.$$

In the next step 905, the Rayleigh quotient

$$\Gamma_{k,after}' := \frac{\underline{w}_k^{try\,H} \underline{\underline{A}}_k \underline{w}_k^{try}}{\underline{w}_k^{try\,H} \underline{\underline{B}}_k \underline{w}_k^{try} + \sigma_k^2 \cdot I}$$

representing the carrier-to-interference-plus-noise ratio (CINR) after subtracting the projection of the associated signal channel vector $\underline{a}_k$ onto the orthogonal base $\underline{u}_k^{(j)}$ of the associated interference channel vector $\underline{b}_k^{(j)}$ is calculated. Then, in step 906, the Rayleigh quotient before performing step 904 is compared with the Rayleigh quotient after having performed step 904. If the query

$$"\Gamma_{k,after}' > \Gamma_{k,before}' ?"$$

yields 'true', the algorithm continues with step 907. Otherwise, if said query yields 'false', the termination of said algorithm is initiated. Next, in step 907, it has to be checked whether the current interferer index is the last interferer index or not. If the query

$$"j = N-1 ?"$$

yields 'true', an updating 910 of the antenna weighting vector is performed:

$$\underline{w}_k^{opt} := \underline{w}_k^{try},$$

and the termination of said algorithm is initiated. Otherwise, if said query yields 'false', an updating of the Rayleigh quotient calculated before executing step 904 is performed in step 908:

$$\Gamma_{k,before}' := \Gamma_{k,after}',$$

and in a combined step 909 an incrementation of the interferer index (j := j+1), and an updating of the antenna weighting vector is performed as shown in step 910. After that, the algorithm starts again with step 904.

The significance of the symbols designated with reference signs in the figures 1 to 9 can be taken from the appended table of reference signs.

Table of the depicted features and their corresponding reference signs

| No. | Feature |
|---|---|
| 100 | block diagram of a mobile receiver comprising means for performing an interference cancellation in accordance with the preferred embodiment of the underlying invention |
| 101a | transmit (TX) antenna of a first mobile terminal (MT1) transmitting desired signals |
| 101b | transmit (TX) antenna of a second mobile terminal (MT2) transmitting interference signals |
| 102a | 1st receive (RX) antenna of the mobile receiver 100 receiving signals coming from MT1 and MT2 |
| 102b | 2nd receive (RX) antenna of the mobile receiver 100 receiving signals coming from MT1 and MT2 |
| 102c | N-th receive (RX) antenna of the mobile receiver 100 receiving signals coming from MT1 and MT2 |
| 103a | 1st combined module of the mobile receiver 100 comprising means for a downconversion, an analog-to-digital conversion (A/D) of the received signal and a guard interval reduction (GIR) |
| 103b | 2nd combined module of the mobile receiver 100 comprising means for a downconversion, an analog-to-digital conversion (A/D) of the received signal and a guard interval reduction (GIR) |
| 103c | N-th combined module of the mobile receiver 100 comprising means for a downconversion, an analog-to-digital conversion (A/D) of the received signal and a guard interval reduction (GIR) |
| 104a | 1st combined module of the mobile receiver 100 comprising a serial-to-parallel converter (S/P), a digital signal processor performing a Fast Fourier Transform (FFT) and a parallel-to-serial converter (P/S) |

(continued)

| No. | Feature |
|---|---|
| 104b | 2nd combined module of the mobile receiver 100 comprising a serial-to-parallel converter (S/P), a digital signal processor performing a Fast Fourier Transform (FFT) and a parallel-to-serial converter (P/S) |
| 104c | N-th combined module of the mobile receiver 100 comprising a serial-to-parallel converter (S/P), a digital signal processor performing a Fast Fourier Transform (FFT) and a parallel-to-serial converter (P/S) |
| 105a | 1st frequency-domain channel estimator of the mobile receiver 100 |
| 105b | 2nd frequency-domain channel estimator of the mobile receiver 100 |
| 105c | N-th frequency-domain channel estimator of the mobile receiver 100 |
| 106 | adaptive processor of the mobile receiver 100 for calculating receive (RX) antenna weighting vector elements for each subcarrier k (for $0 \leq k \leq K-1$) and each receive (RX) antenna i (for $0 \leq i \leq N-1$) to maximize the carrier-to-interference ratio (CIR) given by the Rayleigh quotient $\Gamma_k$, or the carrier-to-interference-plus-noise ratio (CINR) given by the Rayleigh quotient $\Gamma_k'$, respectively |
| 107a | 1st mixer of the mobile receiver 100 |
| 107b | 2nd mixer of the mobile receiver 100 |
| 107c | N-th mixer of the mobile receiver 100 |
| 108 | summation element of the mobile receiver 100 |
| 109 | combined module of the mobile receiver 100 comprising means for performing an equalization and a demodulation of the received signal |
| 200 | block diagram of a mobile transmitter or a transmitting module in an access point (AP) comprising means for performing an interference cancellation in accordance with the preferred embodiment of the underlying invention, wherein a beamforming algorithm is used for maximizing the energy transmitted in direction of the desired mobile terminal MT1 and steering nulls in direction of the interfering mobile terminal MT2 |
| 201a | mobile terminal MT1 transmitting desired signals |
| 201b | mobile terminal MT2 transmitting interference signals |
| 202a | 1st transmit (TX) antenna of the mobile transmitter 200 transmitting signals to MT1 and MT2 |
| 202b | 2nd transmit (TX) antenna of the mobile transmitter 200 transmitting signals to MT1 and MT2 |
| 202c | N-th transmit (TX) antenna of the mobile transmitter 200 transmitting signals to MT1 and MT2 |
| 203a | 1st combined module of the mobile transmitter 200 comprising means for a guard interval insertion (GII), a digital-to-analog conversion (D/A) and an upconversion and of the received signal |
| 203b | 2nd combined module of the mobile transmitter 200 comprising means for a guard interval insertion (GII), a digital-to-analog conversion (D/A) and an upconversion and of the received signal |
| 203c | N-th combined module of the mobile transmitter 200 comprising means for a guard interval insertion (GII), a digital-to-analog conversion (D/A) and an upconversion and of the received signal |
| 204a | 1st combined module of the mobile transmitter 200 comprising a serial-to-parallel converter (S/P), a digital signal processor performing an Inverse Fast Fourier Transform (IFFT) and a parallel-to-serial converter (P/S) |
| 204b | 2nd combined module of the mobile transmitter 200 comprising a serial-to-parallel converter (S/P), a digital signal processor performing an Inverse Fast Fourier Transform (IFFT) and a parallel-to-serial converter (P/S) |
| 204c | N-th combined module of the mobile transmitter 200 comprising a serial-to-parallel converter (S/P), a digital signal processor performing an Inverse Fast Fourier Transform (IFFT) and a parallel-to-serial converter (P/S) |
| 205 | module of the mobile transmitter 200 supplying a frequency-domain OFDM symbol stream to be transmitted |
| 206a | 1st mixer of the mobile transmitter 200 |
| 206b | 2nd mixer of the mobile transmitter 200 |
| 206c | N-th mixer of the mobile transmitter 200 |

(continued)

| No. | Feature |
|---|---|
| 207 | module for calculating transmit (TX) antenna weighting vector elements for each subcarrier k (for $0 \leq k \leq K-1$) and each transmit (TX) antenna i (for $0 \leq i \leq N-1$) to maximize the carrier-to-interference ratio (CIR) given by the Rayleigh quotient $\Gamma_k$, or the carrier-to-interference-plus-noise ratio (CINR) given by the Rayleigh quotient $\Gamma_k'$, respectively |
| 207a | vector scheme comprising the calculated (TX) antenna weighting vector elements of transmit (TX) antenna #0 (for $0 \leq i \leq N-1$) for each subcarrier k (for $0 \leq k \leq K-1$) |
| 207b | vector scheme comprising the calculated (TX) antenna weighting vector elements of transmit (TX) antenna #1 (for $0 \leq i \leq N-1$) for each subcarrier k (for $0 \leq k \leq K-1$) |
| 207c | vector scheme comprising the calculated (TX) antenna weighting vector elements of transmit (TX) antenna #(N-1) (for $0 \leq i \leq N-1$) for each subcarrier k (for $0 \leq k \leq K-1$) |
| 300 | situation in which a first access point AP1 has to independently estimate interferences coming from an interfering mobile terminal MT2 in order to steer nulls in direction of said mobile terminal MT2 |
| 301a | transmit and/or receive (TX/RX) antenna of a first mobile terminal (MT1) transmitting and/or receiving desired signals and/or interference signals |
| 301b | transmit and/or receive (TX/RX) antenna of a second mobile terminal (MT2) transmitting and/or receiving desired signals and/or interference signals |
| 302a | transmit and/or receive (TX/RX) antenna array of a first access point AP1 |
| 302b | transmit and/or receive (TX/RX) antenna array of a second access point AP2 |
| 303a | received sequence of desired signals (black)'and interference signals (hatched) in access point AP1 |
| 303b | received sequence of desired signals (black) and interference signals (hatched) in access point AP2 |
| 400 | block diagram for a mobile transmission system supporting wireless communication over a mobile radio channel by means of a pilot-assisted wireless multi-carrier system considering channel estimation and equalization |
| 401 | transmitter of said mobile transmission system 400 |
| 402 | receiver of said mobile transmission system 400 |
| 403 | Additive White Gaussian Noise (AWGN) channel characterized by a severe frequency-selective fading and a time-variant behavior |
| 404 | input data bits |
| 405 | scrambler used for randomizing the deterministic behavior of predefined pilots in order to minimize interferences |
| 406 | encoder (e.g. a convolutional encoder) |
| 407 | interleaver |
| 408 | bit-to-symbol mapper |
| 409 | OFDM modulator |
| 409a | serial-parallel (S/P) converter |
| 409b | digital signal processor performing an Inverse Fast Fourier Transform (IFFT) |
| 409c | parallel-serial (P/S) converter |
| 410 | guard interval insertion (GII) and windowing in order.to reduce the out-of-band radiation |
| 411 | digital-to-analog (D/A) converter |
| 412a | RF upconversion unit |
| 412b | transmitting antenna |
| 413 | additive noise |

(continued)

| No. | Feature |
|---|---|
| 414a | receiving antenna |
| 414b | RF downconversion unit |
| 415 | analog-to-digital (A/D) converter |
| 416 | guard interval removal (GIR) and windowing in order to reduce the out-of-band radiation |
| 417 | OFDM demodulator |
| 417a | serial-parallel (S/P) converter |
| 417b | digital signal processor performing a Fast Fourier Transform (FFT) |
| 417c | parallel-serial (P/S) converter |
| 418 | channel estimator |
| 419 | channel equalizer |
| 420 | symbol-to-bit mapper |
| 421 | deinterleaver |
| 422 | decoder (e.g. a convolutional decoder) |
| 423 | descrambler |
| 424 | output data bits |
| 501 | detailed view of the OFDM modulator 409 |
| 502 | detailed view of the OFDM demodulator 417 |
| 600 | example for performing a frequency-domain channel estimation in the receiver by means of preamble symbols |
| 601a | example for an OFDM symbol stream before the alignment of the subcarrier phases by means of predetermined pilot patterns |
| 601b | example for an OFDM symbol stream after the alignment of the subcarrier phases by means of predetermined pilot patterns |
| 602 | detailed view of the receiver 100 showing the frequency-domain channel estimation, which is performed with the aid of preamble symbols contained in the received pilot patterns |
| 602a | combined module of the mobile receiver 100 comprising a serial-to-parallel converter (S/P), a digital signal processor performing a Fast Fourier Transform (FFT) and a parallel-to-serial converter (P/S) |
| 602b | mixer of the mobile receiver 100 performing a phase alignment with a predetermined pilot pattern |
| 700 | scheme for individually applying antenna weighting vectors to all subcarriers |
| 701 | matrix scheme comprising transmit (TX) antenna weighting vector elements for each subcarrier k (for $0 \leq k \leq K-1$) and each transmit (TX) antenna i (for $0 \leq i \leq N-1$) to maximize the carrier-to-interference ratio (CIR) given by the Rayleigh quotient $\Gamma_k$, or the carrier-to-interference-plus-noise ratio (CINR) given by the Rayleigh quotient $\Gamma_k'$, respectively |
| 702 | vector scheme comprising the distributed non-normalized output signal for each subcarrier k (for $0 \leq k \leq K-1$) to be transmitted |
| 703 | vector scheme comprising the distributed normalized output power for each subcarrier k (for $0 \leq k \leq K-1$) to be transmitted in case of applying a magnitude adjustment for limiting said output power (= Option #1) |
| 704 | vector scheme comprising the distributed normalized output power for each subcarrier k (for $0 \leq k \leq K-1$) to be transmitted in case of applying a combined threshold and load swapping technique in order to limit said output power (= Option #2) |
| 800 | situation in which one access point AP can transmit different signals to two different mobile stations MT1 and MT2, respectively, at the same frequency and time |

(continued)

| No. | Feature |
|---|---|
| 801a | transmit and/or receive (TX/RX) antenna of a first mobile terminal (MT1) transmitting and/or receiving desired signals and/or interference signals |
| 801b | transmit and/or receive (TX/RX) antenna of a second mobile terminal (MT2) transmitting and/or receiving desired signals and/or interference signals |
| 802 | transmit and/or receive (TX/RX) antenna array of an access point AP |
| 803 | transmitted sequence of desired signals (black) from the access point AP to MT1 and/or MT2 |
| 900 | flow chart of an example for choosing the optimum antenna weighting vector according to the preferred embodiment of the underlying invention |
| 901 | initialization of the antenna weighting vector by setting the antenna weighting vector to the associated signal channel vector: $\underline{w}_k{}^{opt} : \underline{a}_k$ |
| 902 | calculation of the Rayleigh quotient $$\Gamma_{k,before}' := \frac{\underline{w}_k^{opt^H} \underline{\underline{A}}_k \underline{w}_k^{opt}}{\underline{w}_k^{opt^H} \underline{\underline{B}}_k \underline{w}_k^{opt} + \sigma_k^2 \cdot I}$$ representing the carrier-to-interference-plus-noise ratio before subtracting the projection of the associated signal channel vector $\underline{a}_k$ onto the orthogonal base of the associated interference channel vector |
| 903 | reinitialization of the interferer index: j := 0 |
| 904 | calculation of a new antenna weighting vector by means of a first Gram-Schmidt orthogonalization procedure: $$\underline{w}_k^{try} := \underline{a}_k - \text{proj}(\underline{a}_k \mid \underline{b}_k^{(0)}) = \underline{a}_k - \underline{a}_k^H \underline{b}_k^{(0)} \cdot \frac{\underline{b}_k^{(0)}}{\underline{b}_k^{(0)^H} \underline{b}_k^{(0)}}$$ $$\text{with proj}(\underline{a}_k \mid \underline{b}_k^{(0)}) := \underline{a}_k^H \underline{b}_k^{(0)} \cdot \frac{\underline{b}_k^{(0)}}{\underline{b}_k^{(0)^H} \underline{b}_k^{(0)}} = \underline{a}_k^H \underline{b}_k^{(0)} \cdot \frac{\underline{b}_k^{(0)}}{\| \underline{b}_k^{(0)} \|_2^2}$$ |
| 905 | calculation of the Rayleigh quotient $$\Gamma_{k,after}' := \frac{\underline{w}_k^{try^H} \underline{\underline{A}}_k \underline{w}_k^{try}}{\underline{w}_k^{try^H} \underline{\underline{B}}_k \underline{w}_k^{try} + \sigma_k^2 \cdot I}$$ representing the carrier-to-interference-plus-noise ratio after subtracting the projection of the associated signal channel vector $\underline{a}_k$ onto the orthogonal base of the associated interference channel vector |
| 906 | query whether the Rayleigh quotient has been increased or not by performing the algorithm above: $\Gamma_{k,after}' > \Gamma_{k,before}'$ ? |
| 907 | query whether the current interferer index is the last interferer index or not: j = N-1 ? |
| 908 | updating of the Rayleigh quotient: $\Gamma_{k,before}' := \Gamma_{k,after}'$ |
| 909 | incrementation of the interferer index: j := j+1, and updating of the antenna weighting vector: $\underline{w}_k{}^{opt} : \underline{w}_k{}^{try}$ |
| 910 | updating of the antenna weighting vector: $\underline{w}_k{}^{opt} : \underline{w}_k{}^{try}$ |

## EP 1 276 251 B1

**Claims**

1. A mobile transmission system comprising at least one mobile transmitter (200) and/or at least one mobile receiver (100) supporting wireless communication by means of an OFDM system with k sub-carriers, k being larger than 1, comprising:

   - adaptive antenna arrays (102a-c, 202a-c) including N antenna elements for transmission and/or receiving OFDM signals, N being larger than 1,
   - means for performing an OFDM modulation (204a-c) and/or demodulation (104a-c), in which each OFDM signal is composed of at least two sub-carrier signals each being assigned to a respective transmission channel, and
   - means (106, 107a-c, 108) for multiplying an N-dimensional channel vector $a_k$ of the OFDM signal with an N-dimensional complex antenna weighting vector $w_k$ in order to mitigate time-varying multi-path fading behaviour,

   **characterized by**
   means for carrying out the beamforming algorithm, in which the antenna weighting vector $w_k$ is calculated in such a way that the interference power is minimized and, upon keeping the interference power minimized, the signal power is maximized, whereby by performing channel estimation in the receiver an alignment of the subcarrier phase is performed with a predetermined pattern given by the respective receive antenna weighting vector element $w_{k,i}$.

2. A mobile transmission system according to claim 1,
   wherein the antenna weighting vector for each subcarrier is chosen from the orthogonal complement of the space which is spanned by the associated interference channel vector.

3. A mobile transmission system according to anyone of the claims 1 or 2,
   **characterized by**
   means for performing a first Gram-Schmidt orthogonalization for the interference channel vector of each subcarrier before calculating the associated antenna weighting vector for each subcarrier.

4. A mobile transmission system according to claim 3,
   wherein the means for performing said first Gram-Schmidt orthogonalization procedure perform the following steps for each subcarrier:

   - initialization of the antenna weighting vector by setting the antenna weighting vector to the associated signal channel vector,
   - gradual modification of the antenna weighting vector by subtracting the projection of the associated signal channel vector onto the orthogonal base of the associated interference channel vector, in order to obtain an orthogonal set of linearly independent antenna weighting vectors,
   - comparation of the Rayleigh quotient, being the quotient of the signal power by the interference power, before and after said subtraction,
   - abandonment of the the subtraction of said projection if the Rayleigh quotient calculated after having performed said subtraction is smaller than before.

5. A mobile transmission system according to anyone of the claims 3 or 4,
   comprising means for the execution of said first Gram-Schmidt orthogonalization procedure for calculating antenna weighting vectors,
   wherein a normalized orthogonal base is calculated with the aid of a second Gram-Schmidt orthogonalization procedure in order to improve the efficiency of said first Gram-Schmidt orthogonalization procedure.

6. A mobile transmission system according to anyone of the claims 1 to 5,
   comprising means for normalizing the output power for all subcarriers of the mobile transmitter by dividing it by the inner product of the antenna weighting vector and the signal channel vector in order to obtain an equal subcarrier power in the mobile receiver.

7. A mobile transmission system according to claim 6,
   wherein the transmitted signal is distributed to all antenna elements of the mobile transmitter after said normalization of the output power for all subcarriers of said mobile transmitter.

**8.** A mobile transmission system according to anyone of the claims 1 to 7,
wherein the total transmit power from all antenna elements of the mobile transmitter is limited to a predefined upper threshold level.

**9.** A mobile transmission system according to anyone of the claims 1 to 7,
comprising means for performing a load swapping to compensate OFDM symbols represented by a reduced bit sequence by changing the modulation scheme of other subcarriers to a more complex scheme which allows to transmit data at a higher data rate,
wherein the modulation scheme of subcarriers having a power level higher than a predefined threshold is increased, whereas the modulation scheme of subcarriers having a power level lower than a predefined threshold is decreased, thereby departing from the applied OFDM modulation scheme.

**10.** A mobile transmission system according to anyone of the claims 1 to 9, comprising at least one access point, AP, and at least two mobile terminals, MT, wherein orthogonalized antenna weighting vectors are applied to provide a duplex operation in said mobile transmission system in order to enable said access points, AP. to independently communicate with two or more of said mobile terminals, MT, at the same frequency and/or time.

**11.** A method for a wireless communication in an OFDM system with k sub-carriers, k being larger than 1, comprising:

- transmitting and/or receiving an OFDM signal over adaptive antenna arrays (102a-c, 202a-c) including N antenna elements, N being larger than 1,
- modulating (204a-c) and/or demodulating (104a-c) the OFDM signal, said OFDM signal being composed of at least two subcarrier signals each being assigned to a respective transmission channel, and
- multiplying (106, 107a-c, 108) an N-dimensional channel vector $a_k$ of the OFDM signal with an N-dimensional complex antenna weighting vector $w_k$ in order to mitigate time-varying multi-path fading behaviour,

**characterized in that**
the antenna weighting vector $w_k$ is calculated by minimizing the interference power, and then maximizing the signal power upon keeping the interference power minimized,
whereby by performing channel estimation in the receiver an alignment of the subcarrier phase is performed with a predetermined pattern given by the respective receive antenna weighting vector element $w_{k,i}$.

**12.** A method according to claim 11,
wherein the antenna weighting vector for each subcarrier is chosen from the orthogonal complement of the space which is spanned by the associated interference channel vector.

**13.** A method according to anyone of the claims 11 or 12,
wherein a first Gram-Schmidt orthogonalization is performed for the interference channel vector of each subcarrier before calculating the associated antenna weighting vector for each subcarrier.

**14.** A method according to claim 13,
wherein for the execution of said first Gram-Schmidt orthogonalization procedure for calculating antenna weighting vectors the following steps are performed:

- initialization of the antenna weighting vector by setting the antenna weighting vector to the associated signal channel vector,
- gradual modification of the antenna weighting vector by subtracting the projection of the associated signal channel vector onto the orthogonal base of the associated interference channel vector in order to obtain an orthogonal set of linearly independent antenna weighting vectors,
- comparison of the Rayleigh quotient, being the quotient of the signal power by the interference power, before and after said subtraction,
- abandonment of the the subtraction of said projection if the Rayleigh quotient calculated after having performed said subtraction is smaller than before.

**15.** A method according to anyone of the claims 13 or 14,
wherein a normalized orthogonal base is calculated with the aid of a second Gram-Schmidt orthogonalization procedure in order to improve the efficiency of said first Gram-Schmidt orthogonalization procedure.

**16.** A method according to anyone of the claims 11 to 15,
wherein the output power for all subcarriers of the mobile transmitter is normalized by dividing it by the inner product of the antenna weighting vector and the signal channel vector in order to obtain an equal subcarrier power in the mobile receiver.

**17.** A method according to claim 16,
wherein the transmitted signal is distributed to all antenna elements of the mobile transmitter after said normalization of the output power for all subcarriers of said mobile transmitter.

**18.** A method according to anyone of the claims 11 to 17,
wherein the total transmit power from all antenna elements of the mobile transmitter is limited to a predefined upper threshold level.

**19.** A method according to anyone of the claims 11 to 17,
wherein a load swapping technique is employed in order to compensate OFDM symbols represented by a reduced bit sequence by changing the modulation scheme of other subcarriers to a more complex scheme which allows to transmit data at a higher data rate,
wherein the modulation scheme of subcarriers having a power level higher than a predefined threshold is increased, whereas the modulation scheme of subcarriers having a power level lower than a predefined threshold is decreased, thereby departing from the applied OFDM modulation scheme.

**20.** A method according to anyone of the claims 11 to 19,
comprising at least one access point, AP, and at least two mobile terminals, MT), wherein orthogonalized antenna weighting vectors are applied to provide a duplex operation in said mobile transmission system in order to enable said access points, AP, to independently communicate with two or more of said mobile terminals, MT, at the same frequency and/or time.

**21.** A mobile telecommunications device,
**characterized in that**
it supports a mobile transmission system according to anyone of the claims 1 to 10.

**22.** A mobile telecommunications device,
**characterized in that**
it comprises a mobile transmitter and/or a mobile receiver designed for supporting a method according to anyone of the claims 11 to 20.

**23.** A computer program,
which performs, when executed by a processor of a mobile telecommunication device, a method according to anyone of the claims 11 to 20.

**Patentansprüche**

**1.** Mobilübertragungssystem mit wenigstens einem mobilen Sender (200) und/oder wenigstens einem mobilen Empfänger (100), die drahtlose Kommunikation mittels eines OFDM-Systems mit k Unterträgern unterstützen, wobei k größer als 1 ist, mit:

- adaptiven Gruppenantennen (102a-c, 202a-c) umfassend N Antennenelemente zum Senden und/oder Empfang von OFDM-Signalen, wobei N größer als 1 ist,
- Mitteln zum Durchführen einer OFDM-Modulation (204a-c) und/oder -Demodulation (104a-c), in denen jedes OFDM-Signal aus wenigstens zwei Unterträger-Signalen zusammengesetzt ist, wobei jedes einem entsprechenden Sendekanal zugewiesen ist, und
- Mitteln (106, 107a-c, 108) zum Multiplizieren eines N-dimensionalen Kanalvektors $a_k$ des OFDM-Signals mit einen N-dimensionalen komplexen Antennengewichtungsvektor $w_k$, um zeitlich variierendes Mehrfachpfad-Schwundverhalten abzuschwächen,

**gekennzeichnet durch**
Mittel zur Durchführung des Strahlbildungsalgorithmus, in dem der Antennengewichtungsvektor $w_k$ derart berechnet

wird, dass die Interferenzleistung minimiert wird und unter Beibehaltung der Minimierung der Interferenzleistung die Signalleistung maximiert wird,

wobei **durch** die Durchführung einer Kanalschätzung in dem Empfänger ein Abgleich der Unterträgerphase mit einem vorbestimmten Muster, das **durch** das entsprechende Empfängerantennen-Gewichtungsvektorelement $w_{k,i}$ gegeben ist, durchgeführt wird.

2. Mobilübertragungssystem gemäß Anspruch 1,
wobei der Antennengewichtungsvektor für jeden Unterträger aus dem orthogonalen Komplement des Raumes, der durch den zugehörigen Interferenzkanalvektor aufgespannt ist, gewählt wird.

3. Mobilübertragungssystem gemäß einem der Ansprüche 1 oder 2,
**gekennzeichnet durch**
Mittel zur Durchführung einer ersten Gram-Schmidt-Orthogonalisierung für den Interferenzkanalvektor jedes Unterträgers, bevor der zugehörige Antennengewichtungsvektor für jeden Unterträger berechnet wird.

4. Mobilübertragungssystem gemäß Anspruch 3,
wobei die Mittel zur Durchführung der ersten Gram-Schmidt-Orthogonalisierungsprozedur für jeden Unterträger die folgenden Schritte durchführen:

- Initialisierung des Antennengewichtungsvektors durch Einstellen des Antennengewichtungsvektors auf den zugehörigen Signalkanalvektor,
- schrittweise Modifizierung des Antennengewichtungsvektors durch Subtraktion der Projektion des zugehörigen Signalskanalvektors auf die orthogonale Basis des zugehörigen Interferenzkanalvektors, um einen orthogonalen Satz linear unabhängiger Antennengewichtungsvektoren zu erhalten,
- Vergleich des Rayleigh-Quotienten, der der Quotient der Signalleistung durch die Interferenzleistung ist, vor und nach der Subtraktion,
- Abbruch der Subtraktion der Projektion, wenn der nach der Durchführung der Subtraktion berechnete Rayleigh-Quotient kleiner ist als vorher.

5. Mobilübertragungssystem gemäß einem der Ansprüche 3 oder 4,
mit Mitteln zur Ausführung der ersten Gram-Schmidt-Orthogonalisierungsprozedur zur Berechnung von Antennengewichtungsvektoren,
wobei eine normalisierte Orthogonalbasis mit der Hilfe einer zweiten Gram-Schmidt-Orthogonalisierungsprozedur berechnet wird, um die Effizienz der ersten Gram-Schmidt-Orthogonalisierungsprozedur zu verbessern.

6. Mobilübertragungssystem gemäß einem der Ansprüche 1 bis 5,
mit Mitteln zum Normalisieren der Ausgangsleistung für alle Unterträger des mobilen Senders, indem sie durch das innere Produkt des Antennengewichtungsfaktors und dem Signalkanalvektor geteilt wird, um eine gleichmäßige Unterträgerleistung in dem mobilen Empfänger zu erhalten.

7. Mobilübertragungssystem gemäß Anspruch 6,
wobei das übertragene Signal an alle Antennenelemente des mobilen Senders nach der Normalisierung der Ausgangsleistung für alle Unterträger des mobilen Senders verteilt wird.

8. Mobilübertragungssystem gemäß einem der Ansprüche 1 bis 7
wobei die gesamte Sendeleistung von allen Antennenelementen des mobilen Senders auf ein vorbestimmtes oberes Schwellenlevel begrenzt ist.

9. Mobilübertragungssystem gemäß einem der Ansprüche 1 bis 7
mit Mitteln zum Durchführen eines Lastwechsels, um OFDM-Symbole zu kompensieren, die durch eine reduzierte Bitsequenz dargestellt werden, indem das Modulationsschema anderer Unterträger auf ein komplexeres Schema geändert wird, welches Senden von Daten bei einer höheren Datenrate erlaubt, wobei das Modulationsschema von Unterträgern mit einem Leistungspegel, der höher liegt als ein vorbestimmter Schwellwert, erhöht wird, während das Modulationsschema von Unterträgern mit einem Leistungspegel, der geringer ist als ein vorbestimmter Schwellwert, verringert wird, wodurch von dem angewendeten OFDM-Modulationsschema abgewichen wird.

10. Mobilübertragungssystem gemäß einem der Ansprüche 1 bis 9,
mit wenigstens einem Zugangspunkt, AP, und wenigstens zwei mobilen Endgeräten, MT, wobei orthogonalisierte

EP 1 276 251 B1

Antennengewichtsvektoren angewandt werden, um einen Duplex-Betrieb in dem Mobilübertragungssystem bereitzustellen, um den Zugangspunkten, AP, zu ermöglichen, unabhängig mit zwei oder mehr der mobilen Endgeräte, MT, auf derselben Frequenz und/oder zur selben Zeit zu kommunizieren.

**11.** Verfahren für eine drahtlose Kommunikation in einem OFDM-System mit k Unterträgern, wobei k größer als 1 ist, mit:

- Senden und/oder Empfang eines OFDM-Signals über adaptive Gruppenantennen (102a-c, 202a-c) umfassend N Antennenelemente, wobei N größer als 1 ist,
- Modulation (204a-c) und/oder Demodulation (104a-c) des OFDM-Signals, wobei das OFDM-Signal aus wenigstens zwei Unterträger-Signalen zusammengesetzt ist, wobei jedes einem entsprechenden Sendekanal zugewiesen ist, und
- Multiplizieren (106, 107a-c, 108) eines N-dimensionalen Kanalvektors $a_k$ des OFDM-Signals mit einen N-dimensionalen komplexen Antennengewichtungsvektor $w_k$, um zeitlich variierendes Mehrfachpfad-Schwundverhalten abzuschwächen,

**dadurch gekennzeichnet, dass**
der Antennengewichtungsvektor $w_k$ **dadurch** berechnet wird, dass die Interferenzleistung minimiert wird und unter Beibehaltung der Minimierung der Interferenzleistung die Signalleistung maximiert wird,
wobei durch die Durchführung einer Kanalschätzung in dem Empfänger ein Abgleich der Unterträgerphase mit einem vorbestimmten Muster, das durch das entsprechende Empfängerantennen-Gewichtungsvektorelement $w_{k,i}$ gegeben ist, durchgeführt wird.

**12.** Verfahren gemäß Anspruch 11,
wobei der Antennengewichtungsvektor für jeden Unterträger aus dem orthogonalen Komplement des Raumes, der durch den zugehörigen Interferenzkanalvektor aufgespannt ist, gewählt wird.

**13.** Verfahren gemäß einem der Ansprüche 11 oder 12,
wobei eine erste Gram-Schmidt-Orthogonalisierung für den Interferenzkanalvektor jedes Unterträgers durchgeführt wird, bevor der zugehörige Antennengewichtungsvektor für jeden Unterträger berechnet wird.

**14.** Verfahren gemäß Anspruch 13,
wobei zur Durchführung der ersten Gram-Schmidt-Orthogonalisierungsprozedur zur Berechnung der Antennengewichtungsvektoren die folgenden Schritte durchgeführt werden:

- Initialisierung des Antennengewichtungsvektors durch Einstellen des Antennengewichtungsvektors auf den zugehörigen Signalkanalvektor,
- schrittweise Modifizierung des Antennengewichtungsvektors durch Subtraktion der Projektion des zugehörigen Signalskanalvektors auf die orthogonale Basis des zugehörigen Interferenzkanalvektors, um einen orthogonalen Satz linear unabhängiger Antennengewichtungsvektoren zu erhalten,
- Vergleich des Rayleigh-Quotienten, der der Quotient der Signalleistung durch die Interferenzleistung ist, vor und nach der Subtraktion,
- Abbruch der Subtraktion der Projektion, wenn der nach der Durchführung der Subtraktion berechnete Rayleigh-Quotient kleiner ist als vorher.

**15.** Verfahren gemäß einem der Ansprüche 13 oder 14,
wobei eine normalisierte Orthogonalbasis mit der Hilfe einer zweiten Gram-Schmidt-Orthogonalisierungsprozedur berechnet wird, um die Effizienz der ersten Gram-Schmidt-Orthogonalisierungsprozedur zu verbessern.

**16.** Verfahren gemäß einem der Ansprüche 11 bis 15,
wobei die Ausgangsleistung für alle Unterträger des mobilen Senders normalisiert wird, indem sie durch das innere Produkt des Antennengewichtungsfaktors und dem Signalkanalvektor geteilt wird, um eine gleichmäßige Unterträgerleistung in dem mobilen Empfänger zu erhalten.

**17.** Verfahren gemäß Anspruch 16,
wobei das übertragene Signal an alle Antennenelemente des mobilen Senders nach der Normalisierung der Ausgangsleistung für alle Unterträger des mobilen Senders verteilt wird.

**18.** Verfahren gemäß einem der Ansprüche 11 bis 17,

wobei die gesamte Sendeleistung von allen Antennenelementen des mobilen Senders auf ein vorbestimmtes oberes Schwellenlevel begrenzt ist.

**19.** Verfahren gemäß einem der Ansprüche 11 bis 17
wobei ein Lastwechsel technisch eingesetzt wird, um OFDM-Symbole zu kompensieren, die durch eine reduzierte Bitsequenz dargestellt werden, indem das Modulationsschema anderer Unterträger auf ein komplexeres Schema geändert wird, welches Senden von Daten bei einer höheren Datenrate erlaubt, wobei das Modulationsschema von Unterträgern mit einem Leistungspegel, der höher liegt als ein vorbestimmter Schwellwert, erhöht wird, während das Modulationsschema von Unterträgern mit einem Leistungspegel, der geringer ist als ein vorbestimmter Schwellwert, verringert wird, wodurch von dem angewendeten OFDM-Modulationsschema abgewichen wird.

**20.** Verfahren gemäß einem der Ansprüche 11 bis 19,
mit wenigstens einem Zugangspunkt, AP, und wenigstens zwei mobilen Endgeräten, MT, wobei orthogonalisierte Antennengewichtsvektoren angewandt werden, um einen Duplex-Betrieb in dem Mobilübertragungssystem bereitzustellen, um den Zugangspunkten, AP, zu ermöglichen, unabhängig mit zwei oder mehr der mobilen Endgeräte, MT, auf derselben Frequenz und/oder zur selben Zeit zu kommunizieren.

**21.** Mobiles Telekommunikationsgerät,
**dadurch gekennzeichnet, dass**
es ein Mobilübertragungssystem gemäß einem der Ansprüche 1 bis 10 unterstützt.

**22.** Mobiles Telekommunikationsgerät,
**dadurch gekennzeichnet, dass**
es einen zur Unterstützung eines Verfahrens gemäß einem der Ansprüche 11 bis 20 ausgestalteten mobilen Sender und/oder Empfänger aufweist.

**23.** Computerprogramm,
welches ein Verfahren gemäß einem der Ansprüche 11 bis 20 durchführt, wenn es durch einen Prozessor eines mobilen Telekommunikationsgeräts ausgeführt wird.

## Revendications

**1.** Système de transmission mobile comprenant au moins un émetteur mobile (200) et/ou au moins un récepteur mobile (100) prenant en charge une communication sans fil au moyen d'un système de multiplexage OFDM avec k sous-porteuses, k étant supérieur à 1,
comprenant :

- des réseaux d'antennes adaptatives (102a-c, 202a-c), comportant N éléments d'antenne pour la transmission et/ou la réception de signaux de multiplexage OFDM, N étant supérieur à 1 ;
- un moyen pour mettre en oeuvre une modulation (204a-c) et/ou une démodulation (104a-c) par multiplexage OFDM, où chaque signal de multiplexage OFDM est composé d'au moins deux signaux de sous-porteuse chacun étant affecté à un canal de transmission respectif ; et
- un moyen (106, 107a-c, 108) pour multiplier un vecteur de canal à N dimensions $a_k$ du signal de multiplexage OFDM par un vecteur de pondération d'antenne complexe à N dimensions $w_k$ en vue d'atténuer un comportement d'évanouissement multi-chemin variable dans le temps ;

**caractérisé par** :

un moyen pour mettre en oeuvre l'algorithme conformateur de faisceau, dans lequel le vecteur de pondération d'antenne $w_k$ est calculé d'une manière telle que la puissance d'interférence est minimisée et, en maintenant la puissance du d'interférence minimisée, la puissance du signal est maximisée, moyennant quoi en mettant en oeuvre une estimation de canal dans le récepteur, un alignement de la phase de sous-porteuse est mis en oeuvre avec un motif prédéterminé donné par l'élément de vecteur de pondération d'antenne de réception respectif $w_{k,i}$.

**2.** Système de transmission mobile selon la revendication 1,
dans lequel le vecteur de pondération d'antenne pour chaque sous-porteuse est choisi à partir du complément orthogonal de l'espace qui est englobé par le vecteur de canal de brouillage associé.

3.  Système de transmission mobile selon l'une quelconque des revendications 1 ou 2,
    **caractérisé par**
    un moyen pour mettre en oeuvre une première orthogonalisation de Gram-Schmidt pour le vecteur de canal d'interférence de chaque sous-porteuse avant de calculer le vecteur de pondération d'antenne associé pour chaque sous-porteuse.

4.  Système de transmission mobile selon la revendication 3,
    dans lequel le moyen pour mettre en oeuvre ladite première procédure d'orthogonalisation de Gram-Schmidt met en oeuvre les étapes ci-dessous pour chaque sous-porteuse :

    - initialisation du vecteur de pondération d'antenne en définissant le vecteur de pondération d'antenne sur le vecteur de canal de signal associé ;
    - modification progressive du vecteur de pondération d'antenne en soustrayant la projection du vecteur de canal de signal associé sur la base orthogonale du vecteur de canal d'interférence associé, afin d'obtenir un ensemble orthogonal de vecteurs de pondération d'antenne linéairement indépendants ;
    - comparaison du quotient de Rayleigh, lequel est le quotient de la puissance du signal par la puissance du brouillage, avant et après ladite soustraction ;
    - abandon de la soustraction de ladite projection si le quotient de Rayleigh, calculé après avoir mis en oeuvre ladite soustraction, est inférieur à ce qu'il était précédemment.

5.  Système de transmission mobile selon l'une quelconque des revendications 3 ou 4, comprenant un moyen permettant la mise en oeuvre de ladite première procédure d'orthogonalisation de Gram-Schmidt pour calculer les vecteurs de pondération d'antenne ;
    dans lequel une base orthogonale normalisée est calculée à l'aide d'une seconde procédure d'orthogonalisation de Gram-Schmidt afin d'améliorer l'efficacité de ladite première procédure d'orthogonalisation de Gram-Schmidt.

6.  Système de transmission mobile selon l'une quelconque des revendications 1 à 5,
    comprenant un moyen pour normaliser la puissance de sortie de toutes les sous-porteuses de l'émetteur mobile en la divisant par le produit intérieur du vecteur de pondération d'antenne et du vecteur de canal de signal afin d'obtenir une puissance de sous-porteuse égale dans le récepteur mobile.

7.  Système de transmission mobile selon la revendication 6,
    dans lequel le signal transmis est distribué à tous les éléments d'antenne de l'émetteur mobile à l'issue de ladite normalisation de la puissance de sortie de toutes les sous-porteuses dudit émetteur mobile.

8.  Système de transmission mobile selon l'une quelconque des revendications 1 à 7,
    dans lequel la puissance d'émission totale de tous les éléments d'antenne de l'émetteur mobile est limitée à un niveau seuil supérieur prédéfini.

9.  Système de transmission mobile selon l'une quelconque des revendications 1 à 7,
    comprenant un moyen pour mettre en oeuvre une permutation de charge afin de compenser les symboles de multiplexage OFDM représentés par une séquence de bits réduite en remplaçant le schéma de modulation d'autres sous-porteuses par un schéma plus complexe qui permet de transmettre des données à un débit plus élevé ;
    dans lequel le schéma de modulation de sous-porteuses présentant un niveau de puissance supérieur à un seuil prédéfini est augmenté, tandis que le schéma de modulation de sous-porteuses présentant un niveau de puissance inférieur à un seuil prédéfini est diminué, ce qui permet de sortir du schéma de modulation par multiplexage OFDM appliqué.

10. Système de transmission mobile selon l'une quelconque des revendications 1 à 9,
    comprenant au moins un point d'accès, AP, et au moins deux terminaux mobiles, MT, dans lequel des vecteurs de pondération d'antenne orthogonalisés sont appliqués pour fournir un fonctionnement double dans ledit système de transmission mobile, afin de permettre auxdits points d'accès, AP, de communiquer indépendamment avec deux desdits terminaux mobiles, MT, ou plus à la même fréquence et/ou au même instant.

11. Procédé destiné à une communication sans fil dans un système de multiplexage OFDM avec k sous-porteuses, k étant supérieur à 1, le procédé comprenant les étapes ci-dessous consistant à :

- transmettre et/ou recevoir un signal de multiplexage OFDM sur des réseaux d'antennes adaptatives (102a-c, 202a-c), comportant N éléments d'antenne, N étant supérieur à 1 ;
- moduler (204a-c) et/ou démoduler (104a-c) le signal de multiplexage OFDM, ledit signal de multiplexage OFDM étant composé d'au moins deux signaux de sous-porteuse, chacun étant affecté à un canal de transmission respectif ; et
- multiplier (106, 107a-c, 108), un vecteur de canal à N dimensions $a_k$ du signal de multiplexage OFDM par un vecteur de pondération d'antenne complexe à N dimensions $w_k$ en vue d'atténuer un comportement d'évanouissement multi-chemin variable dans le temps ;

**caractérisé en ce que**
le vecteur de pondération d'antenne $w_k$ est calculé en minimisant la puissance d'interférence et en maximisant ensuite la puissance du signal en maintenant la puissance d'interférence minimisée ;
moyennant quoi, en mettant en oeuvre une estimation de canal dans le récepteur, un alignement de la phase de sous-porteuse est mis en oeuvre avec un motif prédéterminé donné par l'élément de vecteur de pondération d'antenne de réception respectif $w_{k,i}$.

**12.** Procédé selon la revendication 11,
dans lequel le vecteur de pondération d'antenne pour chaque sous-porteuse est choisi à partir du complément orthogonal de l'espace qui est englobé par le vecteur de canal d'interférence associé.

**13.** Procédé selon l'une quelconque des revendications 11 ou 12,
dans lequel une première orthogonalisation de Gram-Schmidt est mise en oeuvre pour le vecteur de canal d'interférence de chaque sous-porteuse avant de calculer le vecteur de pondération d'antenne associé pour chaque sous-porteuse.

**14.** Procédé selon la revendication 13,
dans lequel, pour la mise en oeuvre de ladite première procédure d'orthogonalisation de Gram-Schmidt destinée à calculer les vecteurs de pondération d'antenne, les étapes ci-dessous sont mises en oeuvre :

- initialisation du vecteur de pondération d'antenne en définissant le vecteur de pondération d'antenne sur le vecteur de canal de signal associé ;
- modification progressive du vecteur de pondération d'antenne en soustrayant la projection du vecteur de canal de signal associé sur la base orthogonale du vecteur de canal de brouillage associé, afin d'obtenir un ensemble orthogonal de vecteurs de pondération d'antenne linéairement indépendants ;
- comparaison du quotient de Rayleigh, lequel est le quotient de la puissance du signal par la puissance du brouillage, avant et après ladite soustraction ;
- abandon de la soustraction de ladite projection si le quotient de Rayleigh, calculé après avoir mis en oeuvre ladite soustraction, est inférieur à ce qu'il était précédemment.

**15.** Procédé selon l'une quelconque des revendications 13 ou 14,
dans lequel une base orthogonale normalisée est calculée à l'aide d'une seconde procédure d'orthogonalisation de Gram-Schmidt en vue d'améliorer l'efficacité de ladite première procédure d'orthogonalisation de Gram-Schmidt.

**16.** Procédé selon l'une quelconque des revendications 11 à 15,
dans lequel la puissance de sortie de toutes les sous-porteuses de l'émetteur mobile est normalisée en la divisant par le produit intérieur du vecteur de pondération d'antenne et du vecteur de canal de signal afin d'obtenir une puissance de sous-porteuse égale dans le récepteur mobile.

**17.** Procédé selon la revendication 16, dans lequel
le signal transmis est distribué à tous les éléments d'antenne de l'émetteur mobile à l'issue de ladite normalisation de la puissance de sortie de toutes les sous-porteuses dudit émetteur mobile.

**18.** Procédé selon l'une quelconque des revendications 11 à 17,
dans lequel la puissance d'émission totale de tous les éléments d'antenne de l'émetteur mobile est limitée à un niveau seuil supérieur prédéfini.

**19.** Procédé selon l'une quelconque des revendications 11 à 17,
dans lequel une technique de permutation de charge est employée afin de compenser les symboles de multiplexage OFDM représentés par une séquence de bits réduite en remplaçant le schéma de modulation d'autres sous-porteuses par un schéma plus complexe qui permet de transmettre des données à un débit plus élevé ;

dans lequel le schéma de modulation de sous-porteuses présentant un niveau de puissance supérieur à un seuil prédéfini est augmenté, tandis que le schéma de modulation de sous-porteuses présentant un niveau de puissance inférieur à un seuil prédéfini est diminué, ce qui permet de sortir du schéma de modulation par multiplexage OFDM appliqué.

20. Procédé selon l'une quelconque des revendications 11 à 19,
comprenant au moins un point d'accès, AP, et au moins deux terminaux mobiles, MT, dans lequel des vecteurs de pondération d'antenne orthogonalisés sont appliqués pour fournir un fonctionnement double dans ledit système de transmission mobile, afin de permettre auxdits points d'accès, AP, de communiquer indépendamment avec deux desdits terminaux mobiles, MT, ou plus à la même fréquence et/ou au même instant.

21. Dispositif de télécommunication mobile,
**caractérisé en ce que**
il prend en charge un système de transmission mobile selon l'une quelconque des revendications 1 à 10.

22. Dispositif de télécommunication mobile,
**caractérisé en ce que**
il comporte un émetteur mobile et/ou un récepteur mobile conçus de manière à prendre en charge un procédé selon l'une quelconque des revendications 11 à 20.

23. Programme informatique,
lequel met en oeuvre, lorsqu'il est exécuté par un processeur d'un dispositif de télécommunication mobile, un procédé selon l'une quelconque des revendications 11 à 20.

FIG. 1

*) Preamble Symbol

EP 1 276 251 B1

38

FIG. 2

303a

303b

interference signal bursts

desired signal bursts

desired signal

interference signal

302a

302b

300

301a

301b

FIG. 3

FIG. 4

400

**401**

404 — Scramb. (405) → Encod. (406) → Bit/Symbol (407) → Inter-leaver (408) → **409** [S/P (409a) → IFFT (409b) → P/S (409c)] → GII (410) → D/A (411) → RF Upconv. (412a) → 412b

413 ⊕ **403**

**402**

412b → RF Downconv. (414a) 414b → A/D (415) → GIR (416) → **417** [S/P (417a) → FFT (417b) → P/S (417c)] → Channel Estim. (418)

Channel Equal. (419)

Deinter-leaver (420) → Bit/Symb. (421) → Decod. (422) → Descramb. (423) → 424

$$\Delta f = 0.3125 \text{ MHz}$$

$$N_{ST} = 64 \text{ subcarriers}$$

$$B_{sys} = 20 \text{ MHz}$$

64 OFDM samples (time domain), $T_s = 3.2 \text{ μs}$

64 OFDM samples (time domain), $T_s = 3.2 \text{ μs}$

501

502

FIG. 5a

FIG. 5b

guard subcarrier

pilot symbol

data symbol

free subcarrier

600

601a

$j \cdot \mathrm{Im}\{d_n\}$   $\mathrm{Re}\{d_n\}$

n

601b

$j \cdot \mathrm{Im}\{d_n\}$   $\mathrm{Re}\{d_n\}$

n

FIG. 6

602

Preamble information

602b

Preamble Symbol

S/P   FFT   P/S

602a

701

| | Ant. #0 | . . . | Ant. #i | . . . | Ant. #(N-1) |
|---|---|---|---|---|---|
| Subcarrier #0 | $w_{0,0}$ | . . . | $w_{0,i}$ | . . . | $w_{0,(N-1)}$ |
| . . . | . . . | | . . . | | . . . |
| Subcarrier #k | $w_{k,0}$ | . . . | $w_{k,i}$ | . . . | $w_{k,(N-1)}$ |
| . . . | . . . | | . . . | | . . . |
| Subcarrier #(K-1) | $w_{(K-1),0}$ | . . . | $w_{(K-1),i}$ | . . . | $w_{(K-1),(N-1)}$ |

702

**Non-normalized Output Signals $y_k$**

$$y_0 := \underline{w}_0^H \underline{x}_0$$

. . .

$$y_k := \underline{w}_k^H \underline{x}_k$$

. . .

$$y_{(K-1)} := \underline{w}_{(K-1)}^H \underline{x}_{(K-1)}$$

703

**Normalized Output Signals $y_k'$ (Option #1)**

$$y_0' := \underline{w}_0^H \underline{x}_0 / \underline{w}_0^H \underline{a}_0$$

. . .

$$y_k' := \underline{w}_k^H \underline{x}_k / \underline{w}_k^H \underline{a}_k$$

. . .

$$y_{(K-1)}' := \underline{w}_{(K-1)}^H \underline{x}_{(K-1)} / \underline{w}_{(K-1)}^H \underline{a}_{(K-1)}$$

704

**Normalized Output Signals $y_k'$ (Option #2)**

$$y_0' := \underline{x}_0'^H \cdot T(\underline{w}_0 / \underline{w}_0^H \underline{a}_0)$$

. . .

$$y_k' := \underline{x}_k'^H \cdot T(\underline{w}_k / \underline{w}_k^H \underline{a}_k)$$

. . .

$$y_{(K-1)}' := \underline{x}_{(K-1)}'^H \cdot T(\underline{w}_{(K-1)} / \underline{w}_{(K-1)}^H \underline{a}_{(K-1)})$$

$\underline{x}_k'$: swapped transmission signal
$\overline{T}(.)$: threshold function

FIG. 7

EP 1 276 251 B1

801a

802

803

801b

desired signal bursts

desired signal

interference signal

FIG. 8

EP 1 276 251 B1

EP 1 276 251 B1

**Start** → 900

$$\underline{w}_k^{opt} := \underline{a}_k \quad 901$$

$$\Gamma_{k,before}' := \frac{\underline{w}_k^{opt\,H} \underline{\underline{A}}_k \underline{w}_k^{opt}}{\underline{w}_k^{opt\,H} \underline{\underline{B}}_k \underline{w}_k^{opt} + \sigma_k^2 \cdot I} \quad 902$$

$$j := 0 \quad 903$$

$$\underline{w}_k^{try} := \underline{a}_k - \text{proj}\left(\underline{a}_k \mid \underline{b}_k^{(0)}\right) = \underline{a}_k - \underline{a}_k^H \underline{b}_k^{(0)} \cdot \frac{\underline{b}_k^{(0)}}{\underline{b}_k^{(0)\,H} \underline{b}_k^{(0)}} \quad 904$$

$$\Gamma_{k,after}' := \frac{\underline{w}_k^{try\,H} \underline{\underline{A}}_k \underline{w}_k^{try}}{\underline{w}_k^{try\,H} \underline{\underline{B}}_k \underline{w}_k^{try} + \sigma_k^2 \cdot I} \quad 905$$

906 — $\Gamma_{k,after}' > \Gamma_{k,before}'$ ?  — No / Yes

907 — $j = N-1$ ? — No / Yes

$$j := j+1 \\ \underline{w}_k^{opt} := \underline{w}_k^{try} \quad 909$$

$$\Gamma_{k,before}' := \Gamma_{k,after}' \quad 908$$

$$\underline{w}_k^{opt} := \underline{w}_k^{try} \quad 910$$

**End**

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 00118418 A
- EP 00125436 A
- EP 00125435 A
- EP 0982875 A
- US 4353119 A

- US 6141393 A
- US 5694416 A
- US 5982327 A
- US 5999800 A